(19) Europäisches Patentamt

European Patent Office

Office européen des brevets

(11) **EP 3 691 326 B1**

(12) **EUROPEAN PATENT SPECIFICATION**

(45) Date of publication and mention
of the grant of the patent:
**23.04.2025  Bulletin 2025/17**

(21) Application number: **18883267.9**

(22) Date of filing: **02.08.2018**

(51) International Patent Classification (IPC):
*H04W 24/02* ^(2009.01)      *H04W 84/00* ^(2009.01)

(52) Cooperative Patent Classification (CPC):
**H04W 24/02; H04W 84/005**

(86) International application number:
**PCT/CN2018/098255**

(87) International publication number:
**WO 2019/105057 (06.06.2019 Gazette 2019/23)**

(54) **METHOD AND DEVICE FOR NETWORK OPTIMIZATION**

VERFAHREN UND VORRICHTUNG ZUR NETZWERKOPTIMIERUNG

PROCÉDÉ ET DISPOSITIF D'OPTIMISATION DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.11.2017  CN 201711238509**

(43) Date of publication of application:
**05.08.2020  Bulletin 2020/32**

(73) Proprietor: **Huawei Technologies Co., Ltd.
Longgang District
Shenzhen, Guangdong 518129 (CN)**

(72) Inventor: **YU, Guojun
Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 104 244 301      CN-A- 106 028 360
CN-A- 106 888 471      US-A1- 2016 028 471
US-A1- 2016 164 619      US-A1- 2017 013 476
US-A1- 2017 019 799      US-A1- 2017 257 779

• ANONYMOUS: "Research on Coverage Method
of Urban Mobile Communication Network", 23
April 2010 (2010-04-23), pages 1 - 6,
XP055691901, Retrieved from the Internet
<URL:http://www.c114.com.cn/tech/164/a501325.
html>

**Description**

**TECHNICAL FIELD**

This application relates to the field of communications technologies, and in particular, to a network optimization method and apparatus.

**BACKGROUND**

With development of communications technologies, a network architecture has currently evolved into such a network architecture in which different types of base stations coexist. To improve related performance of the network architecture in which different types of base stations coexist, a network needs to be optimized.

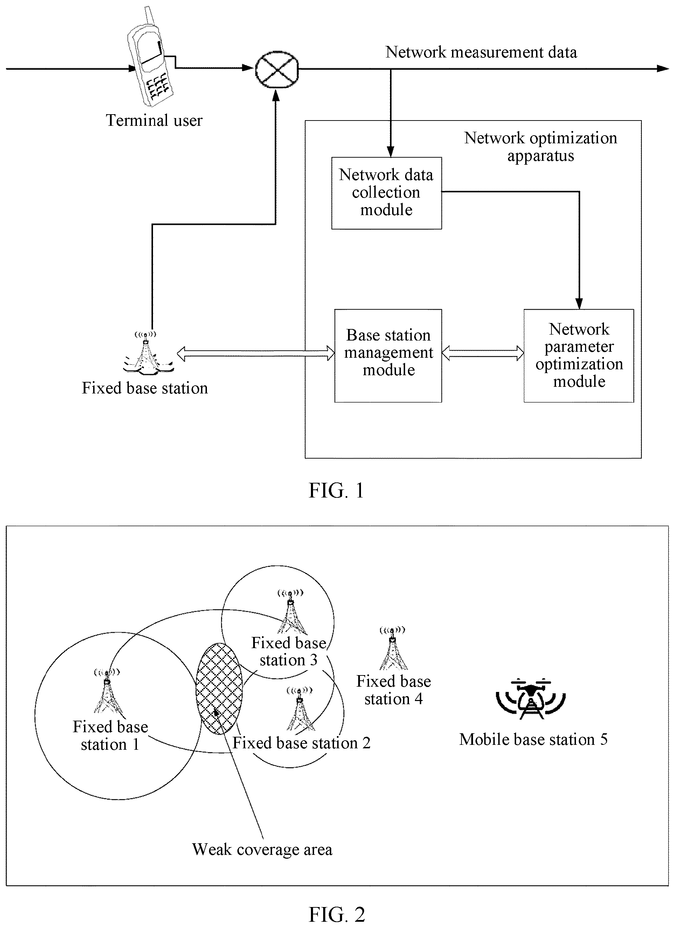

Currently, the network can be optimized by using a network optimization apparatus shown in FIG. 1: A network data collection module collects network measurement data, and sends the collected network measurement data to a network parameter optimization module. A base station management module obtains configuration data of a base station that has accessed the network, and synchronously sends the obtained configuration data to the network parameter optimization module. Based on the network measurement data obtained by the network data collection module and the configuration data of the base station obtained by the base station management module, the network parameter optimization module determines that there is a network problem that needs optimization in the network, and generates an optimization policy. The network parameter optimization module sends the generated optimization policy to the base station management module. The base station management module converts the received optimization policy into a parameter adjustment command that can be identified by the base station, and sends the parameter adjustment command to the base station, thereby implementing network optimization.

Generally, parameters optimized by the optimization policy generated by the network parameter optimization module mainly include a software parameter and a hardware parameter. The software parameter is mainly a software control parameter such as a handover parameter and a neighboring cell relationship. Software parameter optimization does not change signal distribution of the base station. The hardware parameter is mainly a parameter that affects signal distribution. Hardware parameter optimization mainly means modifying transmit power, an antenna beam, an antenna uptilt, an antenna downtilt, a horizontal angle of an antenna, an azimuth, and the like to change signal distribution.

However, according to the foregoing network optimization method, optimization of network signal distribution is still limited.
Prior art document D1 (US 2017/013476 A1) discloses a system. In the system, the SON monitors the cellular network and identifies congestion or capacity issues in the network.
Prior art document D2 (US 2017/257779 A1) discloses a method to supplement network coverage with a fleet of autonomous drones are disclosed.
Prior art document D3 (US 2016/02847: A1) discloses a method for extending mobile device cellular carrier network coverage using unmanned aerial vehicles (UAVs) equipped with telecommunications devices to act as temporary mobile device cellular network towers.

**SUMMARY**

Embodiments of this application provide a network optimization method and apparatus to perform network optimization by using a mobile base station and change a network topology, to provide better network signal distribution.

According to a first aspect of the invention, a network optimization method is provided as set forth in claim 1. In this method, a network optimization apparatus determines that there is a problematic area that needs network optimization, determines a mobile base station for performing network optimization on the problematic area, generates a scheduling task that is used to schedule the mobile base station to move to the problematic area, performs the generated scheduling task, schedules the mobile base station for performing network optimization on the problematic area to move to the problematic area, and performs network optimization on the problematic area by using the mobile base station.

In this embodiment of this application, the mobile base station is scheduled to perform network optimization to change a network topology and provide better network signal distribution.

In a possible design, the network optimization apparatus may determine, in the following manner, that there is the problematic area that needs network optimization: obtaining network measurement data and configuration data of each base station that accesses a network in an area, where the base station that accesses the network may be a mobile base station or a fixed base station; determining, based on the obtained network measurement data and configuration data of each base station that accesses the network in the area, whether coverage performance provided by each base station in the area meets a traffic requirement of the area, and if the coverage performance provided by each base station in the area does not meet the traffic requirement of the area, determining that the area is a problematic area that needs network optimization.

In another possible design, the network optimization apparatus may obtain docking spot information, and determine, based on docking spot location information included in the docking spot information, each docking spot located within a first specified range inside the problematic area that needs network optimization and each docking spot located within a first specified range outside the problematic area that needs network optimization. The network optimization apparatus may obtain engineering parameter data of the mobile base station, and determine, based on location information included in the engineering parameter data, a mobile base station located within a second specified range outside the problematic area that needs network optimization. The network optimization apparatus combines each mobile base station with each docking spot one by one, and for each combination, evaluates performance and determines a performance evaluation value; and uses a mobile base station in a combination with a largest performance evaluation value as the mobile base station for performing network optimization on the problematic area. The network optimization apparatus generates the scheduling task, where the scheduling task is used to schedule the mobile base station in the combination with the largest performance evaluation value to move to a docking spot in the combination with the largest performance evaluation value.

When evaluating the performance for the combination and determining the performance evaluation value, the network optimization apparatus may use the mobile base station to schedule a combination performance evaluation and optimization algorithm to evaluate the performance, to utilize the mobile base station to the utmost. For example, the performance may be evaluated in the following manner: determining an evaluation value of a performance loss caused to an original access network by a move of the mobile base station in the combination out of the original access network; determining an evaluation value of a performance gain generated by access of the mobile base station in the combination to a network covered by the problematic area; determining an evaluation value of a scheduling loss required by scheduling the mobile base station in the combination to move from an original location to the docking spot in the combination; and determining the performance evaluation value of the combination based on the evaluation value of the performance loss, the evaluation value of the performance gain, and the evaluation value of the scheduling loss.

Specifically, the network optimization apparatus may determine the performance evaluation value of the combination according to a formula

$$G_k = a * \sum_{i=1}^{m} V_{i,k_i} - b * L_k$$

, where $G_k$ denotes a performance evaluation value of a $k^{th}$ combination, $k \in [1, m]$ and m is a quantity of combinations and is a positive integer, $V_{i,k_i}$ denotes a difference between an evaluation value of a performance gain generated before a mobile base station in the $k^{th}$ combination accesses the network covered by the problematic area and an evaluation value of a performance gain generated after the mobile base station in the $k^{th}$ combination accesses the network covered by the problematic area, $L_k$ denotes an evaluation value of a scheduling loss required by scheduling the mobile base station in the $k^{th}$ combination to move from an original location to a docking spot in the $k^{th}$ combination, and a and b denote conversion coefficients.

In still another possible design, when the network optimization apparatus generates the scheduling task, if at least two problematic areas need network optimization, the network optimization apparatus classifies problematic areas of a same priority into a group based on an urgency priority of resolving a problem; and generates, on a per group basis and in descending order of urgency priorities of resolving problems, a scheduling task consecutively for each problematic area that needs network optimization in each group obtained through classification. In this embodiment of this application, the classification is performed, and the scheduling task of the problematic area of a higher priority is preferentially generated in the order of priorities. In this way, network optimization can be preferentially performed on the problematic area of a higher priority.

In still another possible design, the network optimization apparatus may select a problematic area on which network optimization cannot be performed by using a fixed base station, so that the problematic area on which network optimization cannot be performed by using the fixed base station is used as a problematic area that needs network optimization. In this embodiment of this application, network optimization is performed on the problematic area on which network optimization cannot be performed by using the fixed base station, so that losses and overheads caused by scheduling of a mobile base station can be reduced.

In still another possible design, the network optimization apparatus may determine a type of the scheduled mobile base station when scheduling the mobile base station to move to the problematic area, where the type of the mobile base station includes an active mobile base station and a passive mobile base station. If the scheduled mobile base station is an active mobile base station, the network optimization apparatus sends a first move instruction to the scheduled mobile base station, where the first move instruction is used to instruct the mobile base station to move to a docking spot in the problematic area that needs network optimization; or if the scheduled mobile base station is a passive mobile base station, the network optimization apparatus sends a second move instruction to a scheduler that drives the passive mobile base station to move, where the second move instruction is used to instruct the scheduler to drive the scheduled mobile base station to move to a docking spot in the problematic area that needs network optimization.

In still another possible design, when performing network optimization on the problematic area by using the mobile base station, and when determining that the scheduled mobile base station has accessed the network covered by the problematic area, the network optimization apparatus may determine an optimization configuration parameter required for performing network optimization on an original base station in the problematic area and on the scheduled mobile base station, and send the optimization configuration parameter to the original base station in the problematic area and the scheduled mobile base station to complete the network optimization on the problematic area.

Further, before performing network optimization on the problematic area, the network optimization apparatus may record an original configuration parameter of the original base station in the problematic area. The original configuration parameter is a configuration parameter that is of the original base station in the problematic area and that is recorded before network optimization is performed on the problematic area. After network optimization is performed on the problematic area by using the mobile base station, if completion of the network optimization on the problematic area is determined, the original configuration parameter may be sent to the original base station in the problematic area to recover a parameter configuration of the original base station in the problematic area.

According to a second aspect of the invention, a network optimization apparatus is provided as set forth in claim 7. The network optimization apparatus includes units or means (means) for performing steps that are performed by the network optimization apparatus according to the first aspect, where the units or means may be implemented by hardware or by executing corresponding software by hardware. The hardware or software includes one or more modules corresponding to the foregoing function. The modules may be software and/or hardware.

In a possible design, the network optimization apparatus includes a problematic area determining unit, a mobile base station scheduling unit, and a task management unit. The problematic area determining unit is configured to determine a problematic area that needs network optimization. The mobile base station scheduling unit is configured to: determine a mobile base station for performing network optimization on the problematic area determined by the problematic area determining unit, and generate a scheduling task, where the scheduling task is used to schedule the mobile base station to move to the problematic area. The task management unit is configured to: perform the scheduling task generated by the mobile base station scheduling unit, schedule the mobile base station to move to the problematic area, and perform network optimization on the problematic area by using the mobile base station.

In another possible design, the network optimization apparatus further includes a docking spot management unit and a mobile base station management unit. The docking spot management unit is configured to: obtain docking spot information, and determine, based on docking spot location information included in the docking spot information, each docking spot located within a first specified range inside the problematic area and each docking spot located within a first specified range outside the problematic area. The mobile base station management unit is configured to: obtain engineering parameter data of the mobile base station, and determine, based on location information included in the engineering parameter data, a mobile base station located within a second specified range outside the problematic area. The mobile base station scheduling unit is configured to: determine the mobile base station for performing network optimization on the problematic area and generate the scheduling task in the following manner: combining, one by one, each mobile base station determined by the mobile base station management unit with each docking spot determined by the docking spot management unit, and for each combination, evaluating performance and determining a performance evaluation value; determining a mobile base station in a combination with a largest performance evaluation value as the mobile base station for performing network optimization on the problematic area; and generating the scheduling task, where the scheduling task is used to schedule the mobile base station in the combination with the largest performance evaluation value to move to a docking spot in the combination with the largest performance evaluation value.

The mobile base station scheduling unit may evaluate the performance and determine the performance evaluation value in the following manner: determining an evaluation value of a performance loss caused to an original access network by a move of the mobile base station in the combination out of the original access network; determining an evaluation value of a performance gain generated by access of the mobile base station in the combination to a network covered by the problematic area; determining an evaluation value of a scheduling loss required by scheduling the mobile base station in the combination to move from an original location to the docking spot in the combination; and determining the performance evaluation value of the combination based on the evaluation value of the performance loss, the evaluation value of the performance gain, and the evaluation value of the scheduling loss.

The performance evaluation value of the combination satisfies a formula:

$$G_k = a * \sum_{i=1}^{m} V_{i,k_i} - b * L_k$$

, where $G_k$ denotes a performance evaluation value of a $k^{th}$ combination, $k \in$ [1, m] and m is a quantity of combinations and is a positive integer, $V_{i,k_i}$ denotes a difference between an evaluation value of a performance gain generated before a mobile base station in the $k^{th}$ combination accesses the network covered by the problematic area and an evaluation value of a performance gain generated after the mobile base station in the $k^{th}$ combination access the network covered by the problematic area, $L_k$ denotes an evaluation value of a scheduling loss required by scheduling the mobile base station in the $k^{th}$ combination to move from an original location to a docking spot in the $k^{th}$ combination, and a and b denote conversion coefficients.

Further, if at least two problematic areas need network optimization, the mobile base station scheduling unit classifies problematic areas of a same priority into a group based on an urgency priority of resolving a problem; and generates, on a per group basis and in descending order of urgency priorities of resolving problems, a scheduling task consecutively for each problematic area that needs network optimization in each group obtained through classification.

In this embodiment of this application, the problematic area that needs network optimization is a problematic area on which network optimization cannot be performed by using a fixed base station.

In still another possible design, the network optimization apparatus further includes a scheduler management unit, where the scheduler management unit is configured to: obtain scheduler configuration data; and determine, based on the scheduler configuration data, a scheduler for driving a passive mobile base station to move. The task management unit is configured to schedule, in the following manner, the mobile base station to move to the problematic area: determining a type of the scheduled mobile base station, where the type of the mobile base station includes an active mobile base station and a passive mobile base station; and if the scheduled mobile base station is an active mobile base station, sending a first move instruction to the scheduled mobile base station, where the first move instruction is used to instruct the mobile base station to move to a docking spot in the problematic area that needs network optimization; or if the scheduled mobile base station is a passive mobile base station, obtaining the scheduler configuration data that is obtained by the scheduler management unit; determining, based on the scheduler configuration data, a scheduler for driving the passive mobile base station to move; and sending a second move instruction to the scheduler that drives the passive mobile base station to move, where the second move instruction is used to instruct the scheduler to drive the scheduled mobile base station to move to a docking spot in the problematic area that needs network optimization.

The task management unit is configured to perform, in the following manner, network optimization on the problematic area by using the mobile base station: determining that the scheduled mobile base station has accessed a network covered by the problematic area; and determining an optimization configuration parameter required for performing network optimization on an original base station in the problematic area and on the scheduled mobile base station, and sending the optimization configuration parameter to the original base station in the problematic area and the scheduled mobile base station.

Further, the task management unit is further configured to: after performing network optimization on the problematic area by using the mobile base station, send an original configuration parameter to the original base station in the problematic area if determining completion of the network optimization on the problematic area, where the original configuration parameter is a configuration parameter that is of the original base station in the problematic area and that is recorded before network optimization is performed on the problematic area.

A network optimization device is provided. The network optimization device includes a processor and a memory. The memory is configured to be coupled to the processor and stores program instructions and data necessary for the network optimization device. The processor invokes and executes program instructions stored in the memory to implement the function of the network optimization apparatus according to the first aspect and any possible design of the first aspect.

According to a third aspect of the invention, an embodiment of this application provides a memory as set forth in claim 12. The memory stores computer instructions. When run on the computer, the instructions can implement the network optimization method that is performed by the network optimization apparatus according to the first aspect and any possible design of the first aspect.

The network optimization apparatus in the embodiments of this application determines the mobile base station for performing network optimization on the problematic area, generates the scheduling task that is used to schedule the mobile base station to move to the problematic area, performs the generated scheduling task, schedules the mobile base station for performing network optimization on the problematic area to move to the problematic area, and performs network optimization on the problematic area by using the mobile base station, thereby changing a network topology and providing better network signal distribution.

## BRIEF DESCRIPTION OF DRAWINGS

FIG. 1 is a schematic structural diagram of a network optimization apparatus for optimizing a network in the prior art;
FIG. 2 is a schematic diagram of a scenario to which a network optimization method is applied according to an embodiment of this application;
FIG. 3 is a schematic structural diagram of a network optimization apparatus according to an embodiment of this application;
FIG. 4 is a schematic diagram of a functional structure of a mobile base station management module according to an embodiment of this application;
FIG. 5 is a schematic diagram of a functional structure of a mobile base station scheduling module according to an embodiment of this application;
FIG. 6 is a schematic diagram of a functional structure of a scheduler management module according to an embodiment of this application;
FIG. 7 is a flowchart of a network optimization method according to an embodiment of this application;

FIG. 8 is an implementation flowchart of generating a scheduling task according to an embodiment of this application;

FIG. 9 is a schematic structural diagram of another network optimization apparatus according to an embodiment of this application; and

FIG. 10 is a schematic structural diagram of a network optimization device according to an embodiment of this application.

## DESCRIPTION OF EMBODIMENTS

The following describes technical solutions in embodiments of this application with reference to accompanying drawings.

Some terms in this application are described first, to facilitate understanding by a person skilled in the art.

(1) A base station is a device in a radio network, such as a radio access network (radio access network, RAN) node (or device) that connects a terminal to a radio network. Currently, some examples of the RAN node are: a next generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wifi) access point (access point, AP), or the like. In addition, in a network structure, the RAN node may include a centralized unit (centralized unit, CU) node and a distributed unit (distributed unit, DU) node. In this structure, a protocol layer of an eNB in a long term evolution (long term evolution, LTE) system is split. A function of a part of the protocol layer is deployed in the CU node for centralized control, and a function of the remaining part or the entire protocol layer is distributed in the DU node, and the CU node centrally controls the DU node.

(2) A mobile base station is a base station that can provide a communication service at different locations. The mobile base station may be a base station or a part of a base station (for example, an antenna part). The mobile base station may be an active mobile base station or a passive mobile base station. The active mobile base station is a mobile base station that has movement power and a mobile control signal receiving device, and can move actively. The passive mobile base station is a mobile base station that has no movement power or mobile control signal receiving device and that needs to be driven by a third-party device (or person) to move.

(3) A standby mobile base station is a mobile base station that is in a standby state without accessing a communications network currently.

(4) A fixed base station is a base station that provides a communication service at a fixed location.

(5) A scheduler is a device that is used to drive a passive mobile base station to move, such as a drone, an unmanned vehicle, or a hot air balloon. The scheduler may alternatively be a specific person, or a combination of a person and a device.

(6) A docking spot is a site available for docking a scheduler and a mobile base station.

(7) An engineering parameter, also referred to as engineering parameter data, is a parameter that is set for a base station during engineering implementation. The engineering parameter data may include information such as a location of a base station and an antenna angle.

FIG. 2 is a schematic diagram of a scenario to which a network optimization method is applied according to an embodiment of this application. Referring to FIG. 2, a base station 1, a base station 2, a base station 3, and a base station 4 are fixed base stations, and a base station 5 is a mobile base station. The base station 1, the base station 2, and the base station 3 are all in a high load state, and a network problem abruptly occurs in a weak coverage area at a triangular center of the base station 1, the base station 2, and the base station 3. For example, strong coverage of network signals needs to be provided in the weak coverage area at the triangular center of the base station 1, the base station 2, and the base station 3. Another fixed base station (the base station 4) around the base station 1, the base station 2, and the base station 3 is also in a high load state, but the mobile base station 5 relatively far from the base station 1, the base station 2, and the base station 3. The mobile base station 5 is in a low load state. In this scenario, if a conventional network optimization method such as adjustment of parameters of the base station 1, the base station 2, the base station 3, and the base station 4 is used to provide strong coverage of network signals for the weak coverage area at the triangular center of the base station 1, the base station 2, and the base station 3, the abrupt network problem cannot be resolved. However, if the mobile base station 5 is moved to the weak coverage area at the triangular center of the base station 1, the base station 2, and the base station 3, network optimization can be relatively easily implemented to provide strong coverage of network signals for the weak coverage area at the triangular center of the base station 1, the base station 2, and the base station 3.

Therefore, the embodiments of this application provide a network optimization method and apparatus. When the network optimization method and apparatus are applied, network optimization can be performed by using a mobile base station, to change a network topology and provide better network signal distribution.

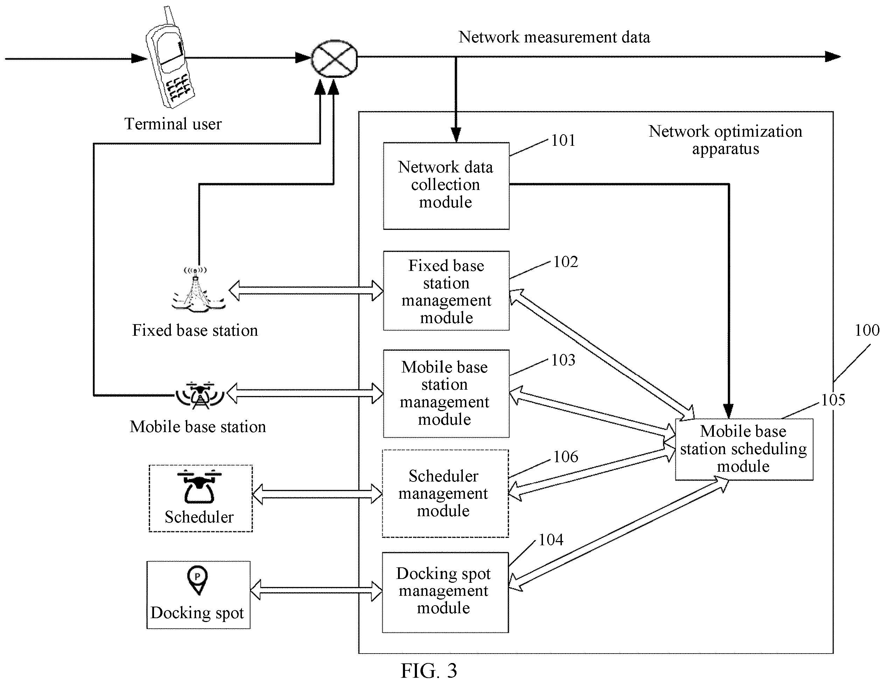

FIG. 3 is a schematic structural diagram of a network optimization apparatus 100 according to an embodiment of this application. Referring to FIG. 3, the network optimization apparatus 100 includes a network data collection module 101, a fixed base station management module 102, a mobile base station management module 103, a docking spot management module 104, and a mobile base station scheduling module 105.

The network data collection module 101 is configured to collect network measurement data. The network measurement data in this embodiment of this application may include, for example, a measurement report (measurement report, MR), and traffic performance statistical data. The network measurement data collected by the network data collection module 101 may be network measurement data of a fixed base station, or network measurement data of a mobile base station. Specifically, the network data collection module 101 may log in to the fixed base station through, for example, a secure file transfer protocol (secure file transfer protocol, SFTP), obtain the network measurement data of the fixed base station, and parse and store the obtained network measurement data of the fixed base station. The network data collection module 101 may alternatively log in to the mobile base station through an SFTP, obtain the network measurement data of the mobile base station, and parse and store the obtained network measurement data of the mobile base station.

The fixed base station management module 102 is configured to obtain configuration data of a fixed base station that has accessed a network. The configuration data of the fixed base station may include, for example, cell scrambling code information, a frequency, and cell information. The configuration data of the fixed base station may also include engineering parameter data such as a location of the fixed base station and an antenna angle. Specifically, the fixed base station management module 102 may send a configuration data synchronization instruction to the fixed base station through a port (socket). After receiving the configuration data synchronization instruction sent by the fixed base station management module 102, the fixed base station may send current configuration data to the fixed base station management module 102. After receiving the configuration data sent by the fixed base station, the fixed base station management module 102 may parse and store the received configuration data of the fixed base station.

The mobile base station management module 103 is configured to obtain configuration data of a mobile base station. The configuration data of the mobile base station may include, for example, cell scrambling code information, a frequency, and cell information. The configuration data of the mobile base station may also include engineering parameter data such as a location of the mobile base station and an antenna angle. Specifically, the mobile base station management module 103 may send a configuration data synchronization instruction to the mobile base station through a port (socket).

After receiving the configuration data synchronization instruction sent by the mobile base station management module 103, the mobile base station may send current configuration data to the mobile base station management module 103. After receiving the configuration data sent by the mobile base station, the mobile base station management module 103 may parse and store the received configuration data of the mobile base station.

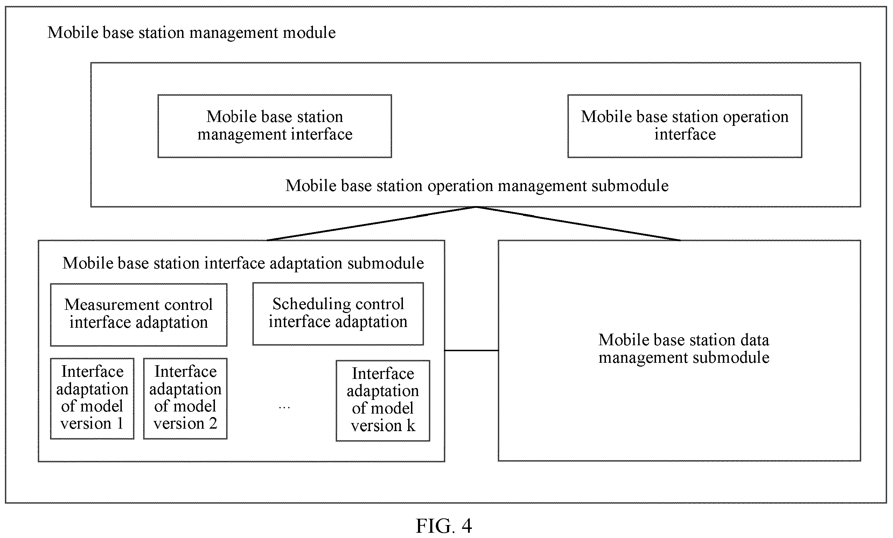

Further, the mobile base station management module 103 provided in this embodiment of this application may be functionally divided into a mobile base station data management submodule, a mobile base station operation management submodule, and a mobile base station interface adaptation submodule, as shown in FIG. 4. The mobile base station data management submodule may be configured to manage the configuration data of the mobile base station. The mobile base station operation management submodule can externally provide a mobile base station management interface to provide functions such as adding, deleting, modifying, and querying data of the mobile base station. The mobile base station operation management submodule can also externally provide a mobile base station operation interface to control a move of an active mobile base station. The mobile base station interface adaptation submodule provides a uniform interface for different mobile base stations, to shield a difference between the different mobile base stations and manage operations on the mobile base station of various models.

The docking spot management module 104 is configured to obtain docking spot information. The docking spot information may include, for example, docking spot location information, docking spot identification information, docking spot type information, docking spot state information (an idle state, a use state, a standby state, and a faulty state). The docking spot management module 104 may provide functions of storing, adding, deleting, modifying, or querying docking spot data.

The mobile base station scheduling module 105 may obtain network measurement data and configuration data of each base station that accesses a network in an area. For example, the mobile base station scheduling module 105 can obtain, from the network data collection module 101, the network measurement data of each base station (which may be a mobile base station or a fixed base station, or may include both a mobile base station and a fixed base station) that accesses the network in the area; obtain, from the fixed base station management module 102, configuration data of a fixed base station that accesses the network in the area; and obtain, from the mobile base station management module 103, configuration data of a mobile base station that accesses the network in the area. The mobile base station scheduling module 105 may determine, based on the obtained network measurement data and configuration data of each base station that accesses the network in the area, whether coverage performance provided by each base station in the area meets a traffic requirement of the area, and if the coverage performance provided by each base station in the area cannot meet the traffic requirement of the area, determine that the area is a problematic area that needs network optimization. After determining the problematic area that needs network optimization, the mobile base station scheduling module 105 may determine a mobile base station for performing network optimization on the problematic area, generate a scheduling task that is used to schedule the mobile base station to move to the problematic area for network optimization, perform the scheduling task to schedule the mobile base station to move to the problematic area to perform network optimization on the problematic area by using the scheduled mobile base station.

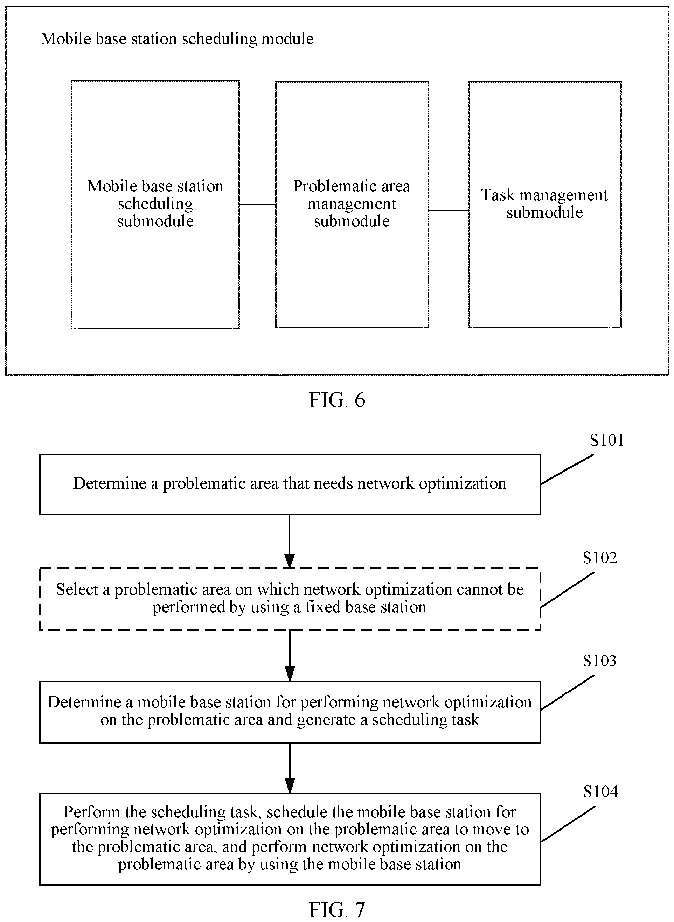

Specifically, the mobile base station scheduling module 105 provided in this embodiment of this application may be functionally divided into a problematic area management submodule, a task management submodule, and a mobile base station scheduling submodule, as shown in FIG. 6. The problematic area management submodule is configured to: determine a problematic area and manage problem data of the problematic area. The problem data includes but is not limited to a location of the problematic area, information about a base station or a cell associated with the problematic area, a time at which a network problem occurs, a current solving state of the network problem, and the like. The mobile base station scheduling submodule is configured to: determine a mobile base station for performing network optimization on the problematic area, and generate, by using for example, a scheduling combination performance evaluation and optimization algorithm, a scheduling task for performing network optimization on the problematic area. The task management submodule completes the scheduling task. The task management submodule is configured to execute the scheduling task generated by the mobile base station scheduling submodule, and manage execution of the scheduling task.

Further, the network optimization apparatus 100 provided in this embodiment of this application may further include a scheduler management module 106. The scheduler management module 106 obtains scheduler configuration data, to determine a scheduler that is used to drive a passive mobile base station to move. The scheduler configuration data includes but is not limited to a scheduler identifier, a scheduler model, a scheduler state (a location, a running speed, a running direction, remaining power, load, or the like), and a scheduling task in which the scheduler participates. The determined scheduler drives the scheduled mobile base station to move. Specifically, the scheduler management module 106 may send a configuration data synchronization instruction to the scheduler. After receiving the configuration data synchronization instruction, the scheduler may send the scheduler configuration data to the scheduler management module 106. After receiving the configuration data sent by the scheduler, the scheduler management module 106 can parse and store the scheduler configuration data. It can be understood that if the scheduler does not have an interface for receiving the configuration data synchronization instruction, the scheduler configuration data can be manually entered into the scheduler management module 106.

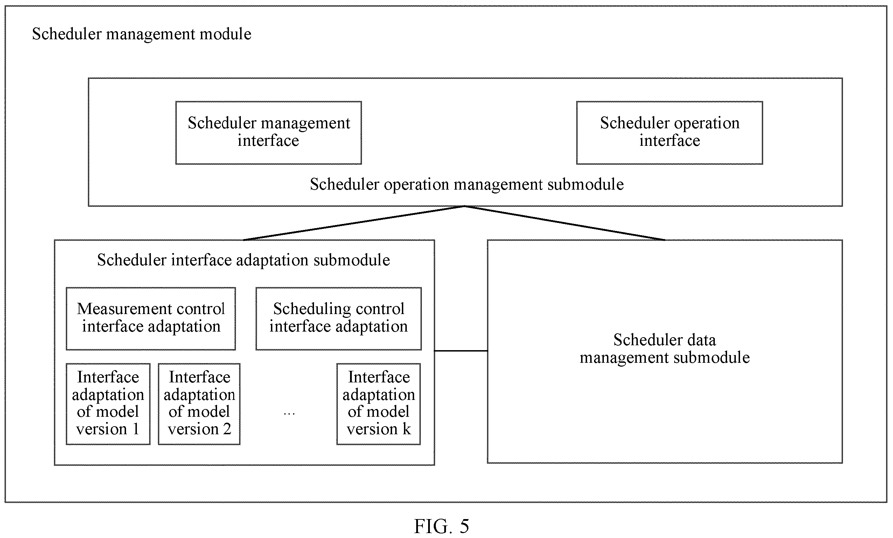

Further, the scheduler management module 106 provided in this embodiment of this application may be functionally divided into a scheduler operation management submodule, a scheduler data management submodule, and a scheduler interface adaptation submodule, as shown in FIG. 5. The scheduler data management submodule may be configured to manage the scheduler configuration data. The scheduler operation management submodule can externally provide a scheduler management interface to provide functions of adding, deleting, modifying, and querying scheduler data. The scheduler operation management submodule can further externally provide a scheduler operation interface to send a scheduling control command to the scheduler and query/report location information and state information of the scheduler. The scheduler interface adaptation submodule provides a uniform interface for each scheduler, to shield a difference between schedulers of various models and manage operations on the schedulers of various models.

It can be understood that the schematic structural diagram of the network optimization apparatus 100 shown in FIG. 3 in this embodiment of this application is merely illustrative, and is not intended to impose any limitation. The network optimization apparatus 100 may further include another component. For example, the network optimization apparatus 100 shown in FIG. 3 may further include a memory. The memory is configured to store program code required by each component in the network optimization apparatus 100 to perform a corresponding function.

A process of performing the network optimization method by the network optimization apparatus 100 according to the embodiments of this application is described below with reference to actual application.

FIG. 7 is a flowchart of a network optimization method according to an embodiment of this application. The method shown in FIG. 7 may be performed by the network optimization apparatus 100, or may be a component included in the network optimization apparatus 100, such as the base station scheduling module 105. As shown in FIG. 7, the method includes the following steps.

S101: The network optimization apparatus 100 determines a problematic area that needs network optimization.

Specifically, the network optimization apparatus 100 may obtain network measurement data and configuration data of an original base station that accesses a network in an area, and determine, based on the network measurement data and the configuration data of the original base station, whether there is a problematic area that needs network optimization.

Specifically, the network optimization apparatus 100 may obtain, by using a network data collection module 101, network measurement data of a fixed base station that accesses a network and network measurement data of a mobile base station that accesses the network in an area; obtain, by using a fixed base station management module 102, configuration data of the fixed base station that accesses the network in the area; obtain, by using a mobile base station management module 103, configuration data of the mobile base station that accesses the network in the area; and determine, based on the obtained network measurement data and configuration data of each base station that accesses the network in the area, whether there is a problematic area that needs network optimization.

In this embodiment of this application, the network optimization apparatus 100 may determine, based on the obtained network measurement data and configuration data of each base station that accesses the network in the area, whether coverage performance provided by each base station in the area meets a traffic requirement of the area; and if the coverage performance provided by each base station in the area does not meet the traffic requirement of the area, determine that the area is a problematic area that needs network optimization. For example, the network optimization apparatus 100 may determine the problematic area in the following manner.

An entire network is divided into m*n grids, and an MR is broken down into two parts: network signal distribution and traffic requirement distribution (for example, distribution of a quantity of measurement times of the MR and distribution of throughputs). Based on a positioning algorithm, the network signal distribution and the traffic requirement distribution are mapped onto the grids to obtain SignalDist and TrafficDist. All historical data is recorded to obtain historical SignalDist(t) and TrafficDist(t). A set of factors (for example, whether it is a holiday, whether it is Double 11 Day, what time it is in a day, whether it is in a summer vacation, or whether a new xxx shopping mall is built) affecting the traffic requirement distribution is denoted as GenTraffic, and factors (for example, whether an xxx building is newly constructed, whether an xx station is newly constructed) affecting the network signal distribution is denoted as GenSignal. All historical factors are denoted as GenTraffic(t) and GenSignal(t). Based on GenTraffic(t) and TrafficDist(t) in history and GenTraffic[t+1] in a future time period, TrafficDist[t+1] is predicted. SignalDist[t+1] is predicted in the same way as TrafficDist[t+1] is predicted. Based on SignalDist[t+1] and TrafficDist[t+1], future MR distribution MRDist[t+1] can be predicted. Based on MRDist[t+1], key performance indicator (Key Performance Indicator, KPI) such as load Load[t+1] of each cell, a weak coverage percentage Weak[t+1] in the area, and a hole coverage percentage Hole[t+1] can be calculated. For example, a formula Fun[t+1]=a1*Load[t+1]+a2*Weak[t+1]*a3+Hole[t+1] is used to determine key performance indicator values, and an area with Fun[t+1] greater than a threshold is determined as a problematic area.

In this embodiment of this application, if the network optimization apparatus 100 determines that there is a problematic area that needs network optimization, step S104 may be performed to generate a scheduling task. If the network optimization apparatus 100 determines that there is no problematic area that needs network optimization, no scheduling task is generated.

S102: The network optimization apparatus 100 selects a problematic area on which network optimization cannot be performed by using a fixed base station.

Specifically, the network optimization apparatus 100 may determine, by using an original network optimization module of the network optimization apparatus 100, a problematic area on which network optimization can be performed by using the fixed base station, and select, from the determined problematic area on which network optimization is performed, the problematic area on which network optimization cannot be performed by using the fixed base station. The network optimization apparatus 100 performs network optimization on the problematic area on which network optimization cannot be performed by using the fixed base station.

Specifically, the network optimization apparatus 100 may perform, by using the mobile base station scheduling module 105, network optimization on the problematic area on which network optimization cannot be performed by using the fixed base station.

In this embodiment of this application, the network optimization apparatus 100 performs network optimization on the problematic area on which network optimization cannot be performed by using the fixed base station, so that losses and overheads caused by scheduling of a mobile base station can be reduced.

For example, in this embodiment of this application, the problematic area on which network optimization cannot be performed by using the fixed base station may be selected, in the following manner, from the determined problematic area that needs network optimization: For a problematic area A, first N (for example, N=5) base stations to which a handover is most frequently performed from a base station of the problematic area are obtained based on traffic measurement data, and are denoted as TOPN neighboring base stations. If load of the TOPN neighboring base stations is lower than T (for example, T=60%), it indicates that traffic of the problematic area A can be shared through optimization adjustment of parameters of the TOPN neighboring base stations, and it is determined that network optimization can be performed on the problematic area A by using the fixed base station and not necessarily by scheduling a mobile base station.

It can be understood that step S102 is optional. In this embodiment of this application, network optimization may also be performed, by scheduling a mobile base station, on the problematic area on which network optimization can be performed by using the fixed base station and that is determined by the network optimization apparatus 100.

S103: The network optimization apparatus 100 determines a mobile base station for performing network optimization on the problematic area, and generates a scheduling task, where the scheduling task is used to schedule the mobile base station to move to the problematic area.

Specifically, the scheduling task generated in this embodiment of this application may be used to indicate the scheduled mobile base station and a docking spot for docking the scheduled mobile base station.

In this embodiment of this application, the network optimization apparatus 100 may determine, by using the mobile base station scheduling module, the mobile base station for performing network optimization on the problematic area, and generate the scheduling task.

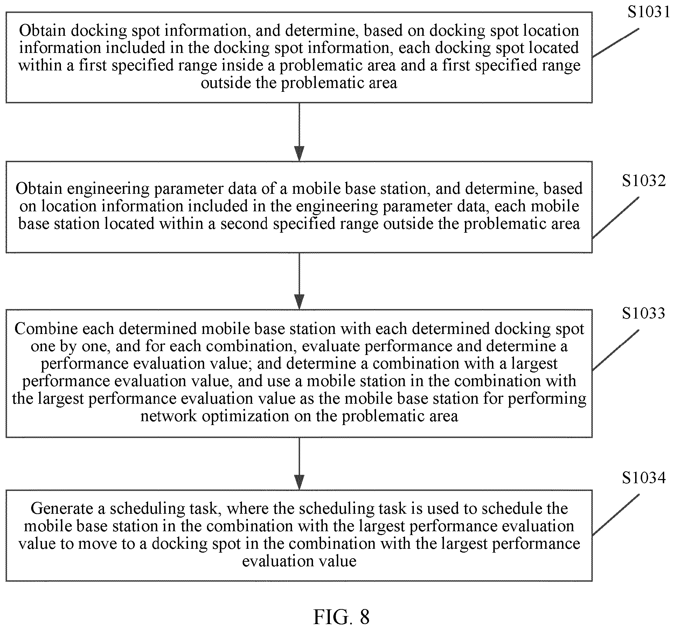

FIG. 8 is a possible implementation flowchart of generating the scheduling task used to schedule the mobile base station to move according to an embodiment of this application. As shown in FIG. 8, the following steps are included.

S1031: Obtain docking spot information, and determine, based on docking spot location information included in the docking spot information, each docking spot located within a first specified range inside the problematic area and each docking spot located within a first specified range outside the problematic area. The first specified range may be defined in a preset manner.

Specifically, the network optimization apparatus 100 may obtain the docking spot information by using a docking spot management module.

S1032: Obtain engineering parameter data of the mobile base station, and determine, based on location information included in the engineering parameter data, a mobile base station located within a second specified range outside the problematic area. The second specified range may be defined in a preset manner.

In this embodiment of this application, a mobile base station that is in a normal state among mobile base stations located within the second specified range outside the problematic area may be determined as a mobile base station that can perform network optimization on the problematic area that needs network optimization. Further, a mobile base station that is in a normal state and not scheduled by an existing scheduling task may be determined as a mobile base station that can perform network optimization on the problematic area that needs network optimization.

Specifically, the network optimization apparatus 100 may obtain the engineering parameter data of the mobile base station by using the mobile base station management module 103.

S1033: Combine each determined mobile base station with each determined docking spot one by one, and for each combination, evaluate performance and determine a performance evaluation value; and determine a combination with a largest performance evaluation value, and use a mobile station in the combination with the largest performance evaluation value as the mobile base station for performing network optimization on the problematic area.

In this embodiment of this application, the performance may be evaluated in the following manner: determining an evaluation value of a performance loss caused to an original access network by a move of the mobile base station in the combination out of the original access network; determining an evaluation value of a performance gain generated by access of the mobile base station in the combination to a network covered by the problematic area; determining an evaluation value of a scheduling loss required by scheduling the mobile base station in the combination to move from an original location to the docking spot in the combination; and determining the performance evaluation value of the combination based on the evaluation value of the performance loss, the evaluation value of the performance gain, and the evaluation value of the scheduling loss.

Specifically, in determining the evaluation value of the performance loss caused to the original access network by the move of the mobile base station in the combination out of the original access network, whether network measurement data of the mobile base station in the combination may be determined based on a network access state of the mobile base station in the combination; if the network access state of the mobile base station in the combination is "not assessing a network", the evaluation value of the performance loss caused to the original access network by the move of the mobile base station in the combination out of the original access network is 0; or if the network access state of the mobile base station in the combination is "assessing a network", the performance is evaluated based on configuration data of the mobile base station in the combination and the network measurement data of the mobile base station, to obtain the evaluation value of the performance loss caused to the original access network by the move of the mobile base station out of the original access network. For example, the evaluation value of the performance loss may be determined in the following simulated estimation manner: obtaining network measurement data MR(A) of a mobile base station A in an original area based on an existing network measurement signal. The MR(A) may be understood as network measurement data of all fixed base stations and/or mobile base stations that include the mobile base station A and exist in an area around the mobile base station, and may be existing traffic data or traffic data predicted based on existing traffic data. Further, if the network measurement signal does not describe corresponding base station information but describes scrambling code information, the network measurement data needs to be determined by referring to configuration data of the fixed base station and the configuration data of the mobile base station. Based on the MR(A), a traffic indicator K1 (such as a throughput) of the mobile base station A in the original area is calculated. The network measurement data of the mobile base station A in the MR(A) is deleted, so that traffic simulation of the original area after the mobile base station A is deleted is obtained and denoted as an MR'(A). Based on the MR'(A), a traffic indicator K1' (such as a throughput) of the mobile base station A in the original area is calculated. The evaluation value of the performance loss caused to the original access network by the move of the mobile base station out of the original access network may be denoted as gain1=K1'-K1.

Specifically, in determining the evaluation value of the performance gain generated by access of the mobile base station in the combination to the network covered by the problematic area, the performance may be evaluated based on the configuration data of the mobile base station in the combination, the network measurement data of the mobile base station, and the location information of the docking spot in the combination, the configuration data of the original base station in the problematic area, and the network measurement data of the original base station in the problematic area, thereby obtaining the evaluation value of the performance gain generated by access of the mobile base station in the combination to the network covered by the problematic area. For example, the evaluation value of the performance gain may be determined in the following simulated estimation manner: obtaining network measurement data MR(B) of a problematic area B based on an existing network measurement signal. The network measurement data of the problematic area B may be understood as network measurement data of all fixed base stations and/or mobile base stations in the problematic area, and may be existing traffic data or traffic data predicted based on existing traffic data. Based on the MR(B), a traffic indicator K2 (such as a throughput) of the problematic area is calculated. Signal distribution DIST(x, y, z) at each location after the mobile base station A is added to the docking spot is calculated. The signal distribution may be calculated by using a simple signal simulation formula, or may be predicted through signal simulation performed by combining a base station device with an electronic map. Location information of each MR, that is, (x, y, z)=loc(MR), is obtained based on a positioning technology of the MR. MR distribution after the mobile base station A is moved to the problematic area B, denoted as an MR'(B), is obtained based on the DIST(x, y, z), the MR(B), and the loc(MR). Due to the newly added mobile base station A, a quantity of measured cells per MR of the new MR'(B) may exceed an original 3GPP-defined value. In this case, a measurement value of weak signals may be deleted, so that each new MR satisfies 3GPP requirements. Based on the MR'(B), a traffic indicator K2' (such as a throughput) of the problematic area is calculated. The evaluation value of the performance gain generated by access of the mobile base station to the network covered by the problematic area may be denoted as gain2=K2'-K2.

In this embodiment of this application, the evaluation value of the scheduling loss required by scheduling the mobile base station in the combination to move from an original location to the docking spot in the combination may be determined according to the following formula:

$L_k$= $\varepsilon_1$ *electric energy consumption+ $\varepsilon_2$ *scheduling depreciation expense, where

$L_k$ is the evaluation value of the scheduling loss required by scheduling the mobile base station to move from the original location to the docking spot in the combination, and $\varepsilon_1$ and $\varepsilon_2$ are preset coefficients.

In determining the performance evaluation value of the combination based on the evaluation value of the performance loss, the evaluation value of the performance gain, and the evaluation value of the scheduling loss, the following formula may be used:

$$G_k = a * \sum_{i=1}^{m} V_{i,k_i} - b * L_k,$$

where

$G_k$ denotes a performance evaluation value of a $k^{th}$ combination, $k \in [1, m]$ and m is a quantity of combinations and is a positive integer, $V_{i,k_i}$ denotes a difference between an evaluation value of a performance gain generated before a mobile base station in the $k^{th}$ combination accesses the network covered by the problematic area and an evaluation value of a performance gain generated after the mobile base station in the $k^{th}$ combination access the network covered by the problematic area, $L_k$ denotes an evaluation value of a scheduling loss required by scheduling the mobile base station in the $k^{th}$ combination to move from an original location to a docking spot in the $k^{th}$ combination, and a and b denote conversion coefficients.

In this embodiment of this application, the mobile base station can be utilized to the utmost by using the performance evaluation and optimization algorithm of the scheduling combination of the mobile base station.

Further, before evaluating a combination of a mobile base station and a docking spot in this embodiment of this application, an impracticable combination may be selected in advance, and a performance evaluation value of the impracticable combination is set to a minimum value. The impracticable combination may be, for example, a combination in which a docking spot has been docked at another mobile base station, a combination in which a mobile base station has been serving another problematic area, a combination in which remaining electricity of a mobile base station is not surely enough for moving to a docking spot in the problematic area that needs optimization, or a combination in which a mobile base station cannot move, within a specified time, to a docking spot in the problematic area that needs optimization. This is not enumerated exhaustively in this embodiment of this application.

In this embodiment of this application, after the performance evaluation value of each combination of the mobile base station and the docking spot is determined, the mobile base station in the combination with the largest performance evaluation value may be selected as the mobile base station for performing network optimization on the problematic area.

S1034: Generate the scheduling task, where the scheduling task is used to schedule the mobile base station in the combination with the largest performance evaluation value to move to a docking spot in the combination with the largest performance evaluation value.

In a possible implementation, if at least two problematic areas need network optimization, the network optimization apparatus 100 may classify problematic areas with a same priority into a group based on an urgency priority of resolving a problem; and generate, on a per group basis and in descending order of urgency priorities of resolving problems, a scheduling task for each problematic area that needs network optimization in each group obtained through classification. For example, classification may be performed in order of times at which network problems occur in the problematic area, and problematic areas in which network problems are occurring or about to occur are classified into a group, and problematic areas in which network problems are about to occur after expiry of a preset time (such as 30 minutes) are classified into a group. After the problematic areas are classified, the network optimization apparatus 100 may generate, on a per group basis and in descending order of urgency priorities of resolving problems, a scheduling task consecutively for each problematic area that needs network optimization in each group obtained through classification, where the scheduling task is used to schedule the mobile base station to move. For example, when classification is performed in order of times at which network problems occur in the problematic area, a scheduling task may be generated preferentially for a problematic area in which a network problem is occurring or about to occur, and a scheduling task may be generated later for a problematic area in which a network problem is about to occur after expiry of a preset time (such as 30 minutes).

In this embodiment of this application, the classification is performed, and the scheduling task of the problematic area of a higher priority is preferentially generated in the order of priorities. In this way, network optimization can be performed on the problematic area of a higher priority preferentially.

S104: The network optimization apparatus 100 performs the scheduling task to schedule the mobile base station for performing network optimization on the problematic area to move to the problematic area to perform network optimization on the problematic area by using the mobile base station.

Specifically, in this embodiment of this application, the network optimization apparatus 100 may schedule, by using the mobile base station scheduling module 105, the mobile base station to move to a docking spot in the problematic area that needs network optimization. Specifically, the mobile base station scheduling module 105 may determine, based on a type of the mobile base station (may be an active mobile base station or a passive mobile base station), whether the scheduled mobile base station is an active mobile base station or a passive mobile base station, so that different scheduling manners can be applied. If the scheduled mobile base station is an active mobile base station, the mobile base station scheduling module 105 sends a first move instruction to the scheduled mobile base station. The first move instruction is used to instruct the mobile base station to move to the docking spot in the problematic area that needs network optimization. For example, the mobile base station scheduling module 105 may determine the first move instruction in the following manner: determining a move command for scheduling the mobile base station to move, converting the determined move command into a first move instruction that can be identified by the scheduled mobile base station, and sending the first move instruction to the scheduled mobile base station. Specifically, the mobile base station scheduling module 105 may send, to the mobile base station management module 103, the first move instruction for scheduling the mobile base station to move, and the first move instruction may include three parts: a command type (move), an operation object (an identifier of the scheduled mobile base station), and a target location (a location of the docking spot in the problematic area that needs network optimization). After obtaining the first move instruction sent by the mobile base station scheduling module 105, the mobile base station management module 103 converts, based on a protocol of the scheduled mobile base station, the move command into the first move instruction that can be identified by the scheduled mobile base station, and sends the converted first move instruction to the scheduled mobile base station through a communications interface of the scheduled mobile base station. After receiving the first move instruction, the mobile base station may move, based on target location information included in the first move instruction, to the docking spot of the problematic area that needs network optimization.

If the scheduled mobile base station is a passive mobile base station, the mobile base station scheduling module 105 sends a second move instruction to a scheduler that drives the passive mobile base station to move. The second move instruction is used to instruct the scheduler to drive the scheduled mobile base station to move to the docking spot in the problematic area that needs network optimization. Specifically, the mobile base station scheduling module 105 may obtain scheduler configuration data by using the scheduler management module 106, determine a scheduler for driving the passive mobile base station to move, and send the second move instruction to the scheduler that drives the passive mobile base station to move, so that the scheduler drives the scheduled mobile base station to move to the docking spot in the problematic area that needs network optimization. A process of determining the second move instruction is similar to the process of determining the first move instruction. Details are not described herein again.

In this embodiment of this application, after the mobile base station moves to the docking spot of the problematic area that needs network optimization, and after the mobile base station scheduling module 105 determines that the scheduled mobile base station has accessed the network covered by the problematic area, network optimization can be performed on the problematic area by using the mobile base station. Specifically, the mobile base station scheduling module 105 may determine a network access instruction that is used to instruct the scheduled mobile base station to access the network, convert the network access instruction into an instruction that can be identified by the scheduled mobile base station, and send the instruction to the scheduled mobile base station. Specifically, the mobile base station scheduling module 105 may send a network access instruction to the mobile base station management module 103. The network access instruction includes two parts: a command type (assessing the network) and an operation object (an identifier of the scheduled mobile base station). After obtaining the network access instruction sent by the mobile base station scheduling module 105, the mobile base station management module 103 converts, based on a protocol of the scheduled mobile base station, the network access instruction into the network access instruction that can be identified by the scheduled mobile base station, and sends the converted network access instruction to the scheduled mobile base station through the communications interface of the scheduled mobile base station. After receiving the converted network access instruction, the mobile base station can complete initialization configuration and access the network.

In this embodiment of this application, after the scheduled mobile base station has accessed the network covered by the problematic area, the network optimization apparatus 100 may determine an optimization configuration parameter required for performing network optimization on an original base station in the problematic area and on the scheduled mobile base station, and send the optimization configuration parameter to the original base station in the problematic area and the scheduled mobile base station to complete the network optimization on the problematic area. Specifically, in this embodiment of this application, the mobile base station scheduling module 105 may determine the optimization configuration parameter based on an existing network optimization parameter configuration method, and send the optimization configuration parameter to the fixed base station management module 102, and the fixed base station management module 102 sends the optimization configuration parameter to an original fixed base station in the problematic area. The mobile base station scheduling module 105 sends the determined optimization configuration parameter to the mobile base station management module 103, and the mobile base station management module 103 sends the optimization configuration parameter to an original mobile base station in the problematic area and the newly scheduled mobile base station.

Further, in this embodiment of this application, after network optimization is performed by using the scheduled mobile base station, if it is determined that the problematic area needs no more network optimization, the mobile base station scheduling module 105 may determine a network disconnection instruction that is used to instruct the scheduled mobile base station to disconnect from the network, convert the network disconnection instruction into a network disconnection instruction that can be identified by the scheduled mobile base station, and send the converted network disconnection instruction to the scheduled mobile base station to stop using the mobile base station for network optimization. Specifically, the mobile base station scheduling module 105 may send the network disconnection instruction to the mobile base station management module 103. The network disconnection instruction includes two parts: a command type (disconnecting from the network) and an operation object (an identifier of the scheduled mobile base station). After obtaining a deactivation command sent by the mobile base station scheduling module 105, the mobile base station management module 103 converts, based on the protocol of the scheduled mobile base station, the network disconnection instruction into a network disconnection instruction that can be identified by the scheduled mobile base station, and sends the converted network disconnection instruction to the scheduled mobile base station through the communications interface of the scheduled mobile base station. After receiving the converted network disconnection instruction, the mobile base station can stop serving the problematic area and complete the process of network optimization on the problematic area.

Further, in this embodiment of this application, before performing network optimization on the problematic area, for example, before sending the optimization configuration parameter to the original base station in the problematic area and the scheduled mobile base station, the network optimization apparatus 100 may record an original configuration parameter of the original base station in the problematic area. The original configuration parameter is a configuration parameter that is of the original base station in the problematic area and that is recorded before network optimization is performed on the problematic area. After network optimization is performed by using the scheduled mobile base station, if it is determined that the problematic area needs no more network optimization, the original configuration parameter that is of the original base station in the problematic area and that is recorded before network optimization is performed on the problematic area may be utilized, and the original configuration parameter may be sent to the original base station in the problematic area to recover a parameter configuration of the original base station in the problematic area. Specifically, in this embodiment of this application, the mobile base station scheduling module 105 may record the original configuration parameter of the original base station, and send the original configuration parameter to the fixed base station management module 102, and the fixed base station management module 102 sends the original configuration parameter to the original fixed base station in the problematic area. The mobile base station scheduling module 105 sends the determined original configuration parameter to the mobile base station management module 103, and the mobile base station management module 103 sends the original configuration parameter to the original mobile base station in the problematic area.

According to the network optimization method provided in this embodiment of this application, mobility features of the mobile base station are fully used. When the network problem cannot be fully resolved by adjusting the parameter of the original base station in the problematic area, the mobile base station can be scheduled for network optimization, thereby providing better network signal distribution and resolving a problem of network signal coverage in different time periods. For example, users in an area are highly dense (for example, in a parade or sports event) compared with usual days, and user density exceeds a management capability of the base station in the area. Mobile stations are scheduled, so that a relatively low-loaded mobile base station or a standby mobile base station is moved and scheduled to the problematic area, to provide stronger signal coverage and resolve this problem. For another example, to resolve a traffic peak caused by movement of users, without moving a base station, an operator needs to make an upper limit of a user capacity of a base station in each area higher than an average quantity of users. The network can be deployed by scheduling the mobile base station, so that the mobile base station moves along with the users and a total quantity of base station devices can be reduced. In another example, with application of the network optimization method provided in this embodiment of this application, a problem of vast communication breakdown caused by factors such as natural disasters can be resolved by optimized scheduling of mobile base stations.

It can be understood that the network optimization apparatus in this embodiment of this application includes a hardware structure and/or a software module that perform each corresponding function to implement the foregoing functions. A person skilled in the art should easily be aware that, in combination with the examples described in the embodiments disclosed in this specification, units and algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, functional units of the network optimization apparatus may be obtained through division based on the foregoing method examples. For example, a functional unit may be obtained through division based on each corresponding function, or two or more functions may be integrated into one processing unit. The integrated unit may be implemented in a form of hardware, or may be implemented in a form of a software function unit, or may be implemented in a form of a processor or chip. It should be noted that, in this embodiment of the present invention, unit division is used as an example, and is merely a logical function division. In actual implementation, another division manner may be used.

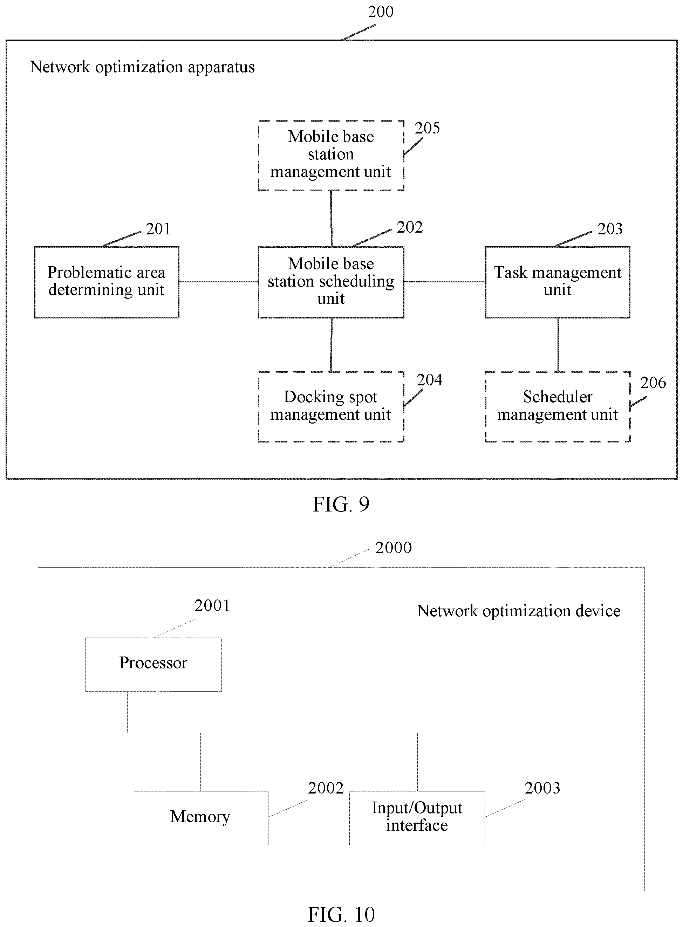

Based on a same concept as the foregoing method embodiment, when implementation is in a form of a software function unit, FIG. 9 is a schematic structural diagram of a network optimization apparatus 200 according to an embodiment of this application. As shown in FIG. 9, the network optimization apparatus 200 may include a problematic area determining unit 201, a mobile base station scheduling unit 202, and a task management unit 203.

Specifically, the problematic area determining unit 201, the mobile base station scheduling unit 202, and the task management unit 203 included in the network optimization apparatus 200 may be understood as submodules included in the mobile base station scheduling module 105. The problematic area determining unit 201 may be understood as a problematic area management submodule included in the mobile base station scheduling module 105; the mobile base station scheduling unit 202 may be understood as a mobile base station scheduling submodule included in the mobile base station scheduling module 105; and the task management unit 203 may be understood as a task management submodule included in the mobile base station scheduling module 105.

The problematic area determining unit 201 is configured to determine a problematic area that needs network optimization. The mobile base station scheduling unit 202 is configured to determine a mobile base station for performing network optimization on the problematic area determined by the problematic area determining unit 201, and generate a scheduling task. The scheduling task is used to schedule the mobile base station to move to the problematic area. The task management unit 203 is configured to: perform the scheduling task generated by the mobile base station scheduling unit, to schedule the mobile base station to move to the problematic area to perform network optimization on the problematic area by using the mobile base station.

In this embodiment of this application, the mobile base station scheduling unit 202 may generate the scheduling task in the following manner: if at least two problematic areas need network optimization, classifying problematic areas of a same priority into a group based on an urgency priority of resolving a problem; and generating, on a per group basis and in descending order of urgency priorities of resolving problems, a scheduling task consecutively for each problematic area that needs network optimization in each group obtained through classification.

In this embodiment of this application, the problematic area that needs network optimization and that is determined by the problematic area determining unit 201 may be a problematic area on which network optimization cannot be performed by using a fixed base station.

Specifically, in this embodiment of this application, the task management unit 203 may perform, in the following manner, network optimization on the problematic area by using the mobile base station: determining that the scheduled mobile base station has accessed a network covered by the problematic area; and determining an optimization configuration parameter required for performing network optimization on an original base station in the problematic area and on the scheduled mobile base station, and sending the optimization configuration parameter to the original base station in the problematic area and the scheduled mobile base station.

Further, the task management unit 203 is further configured to: after performing network optimization on the problematic area by using the mobile base station, send an original configuration parameter to the original base station in the problematic area if determining completion of the network optimization on the problematic area, where the original configuration parameter is a configuration parameter that is of the original base station in the problematic area and that is recorded before network optimization is performed on the problematic area.

In this embodiment of this application, the network optimization apparatus 200 may further include a docking spot management unit 204 and a mobile base station management unit 205. The docking spot management unit 204 is configured to: obtain docking spot information, and determine, based on docking spot location information included in the docking spot information, each docking spot located within a first specified range inside the problematic area and each docking spot located within a first specified range outside the problematic area. The mobile base station management unit 205 is configured to: obtain engineering parameter data of the mobile base station, and determine, based on location information included in the engineering parameter data, a mobile base station located within a second specified range outside the problematic area. The mobile base station scheduling unit 202 may combine, one by one, each mobile base station determined by the mobile base station management unit 205 with each docking spot determined by the docking spot management unit 204, and for each combination, evaluate performance and determine a performance evaluation value; use a mobile base station in a combination with a largest performance evaluation value as the mobile base station for performing network optimization on the problematic area; and generate the scheduling task, where the scheduling task is used to schedule the mobile base station in the combination with the largest performance evaluation value to move to a docking spot in the combination with the largest performance evaluation value.

Specifically, the docking spot management unit 204 may be understood as the docking spot management module 104 in the foregoing embodiment; the mobile base station management unit 205 may be understood as the mobile base station management module 103 in the foregoing embodiment, and therefore, functions of the docking spot management unit 204 and the mobile base station management unit 205 are not described in detail herein again.

The mobile base station scheduling unit 202 may be configured to evaluate the performance and determine the performance evaluation value in the following manner:

determining an evaluation value of a performance loss caused to an original access network by a move of the mobile base station in the combination out of the original access network; determining an evaluation value of a performance gain generated by access of the mobile base station in the combination to a network covered by the problematic area; determining an evaluation value of a scheduling loss required by scheduling the mobile base station in the combination to move from an original location to the docking spot in the combination; and determining the performance evaluation value of the combination based on the evaluation value of the performance loss, the evaluation value of the performance gain, and the evaluation value of the scheduling loss.

The performance evaluation value of the combination satisfies the following formula:

$$G_k = a * \sum_{i=1}^{m} V_{i,k_i} - b * L_k ,$$

where

$G_k$ denotes a performance evaluation value of a $k^{th}$ combination, $k \in [1, m]$ and $m$ is a quantity of combinations and is a positive integer, $V_{i,k_i}$ denotes a difference between an evaluation value of a performance gain generated before a mobile base station in the $k^{th}$ combination accesses to the network covered by the problematic area and an evaluation value of a performance gain generated after the mobile base station in the $k^{th}$ combination accesses the network covered by the problematic area, $L_k$ denotes an evaluation value of a scheduling loss required by scheduling the mobile base station in the $k^{th}$ combination to move from an original location to a docking spot in the $k^{th}$ combination, and a and b denote conversion coefficients.

In this embodiment of this application, the network optimization apparatus 200 may further include a scheduler management unit 206. The scheduler management unit 206 is configured to obtain scheduler configuration data. The task management unit 203 is configured to: obtain the scheduler configuration data that is obtained by the scheduler management unit 206, and determine, based on the scheduler configuration data, a scheduler for driving a passive mobile base station to move.

The task management unit 203 is configured to schedule, in the following manner, the mobile base station to move to the problematic area: determining a type of the scheduled mobile base station, where the type of the mobile base station includes an active mobile base station and a passive mobile base station; and if the scheduled mobile base station is an active mobile base station, sending a first move instruction to the scheduled mobile base station, where the first move instruction is used to instruct the mobile base station to move to a docking spot in the problematic area that needs network optimization; or if the scheduled mobile base station is a passive mobile base station, the task management unit 203 is configured to: obtain the scheduler configuration data that is obtained by the scheduler management unit 206; determine, based on the scheduler configuration data, a scheduler for driving the passive mobile base station to move; and send a second move instruction to the scheduler that drives the passive mobile base station to move, where the second move instruction is used to instruct the scheduler to drive the scheduled mobile base station to move to a docking spot in the problematic area that needs network optimization.

Based on a same concept as the foregoing method embodiment, when implementation is in a form of a processor, FIG. 10 is a schematic structural diagram of a network optimization device 2000 according to an embodiment of this application. As shown in FIG. 10, the network optimization device 2000 includes a processor 2001 and a memory 2002, and the network optimization device 2000 may further include an input/output interface 2003. The memory 2002 is configured to be coupled to the processor 2001, and stores program instructions and data necessary for the network optimization device. The processor 2002 invokes and executes the program instructions stored in the memory 2002, transmits and receives data through the input/output interface 2003, and implements the network optimization method according to the foregoing method embodiment.

In an implementation process, steps in the foregoing method embodiment can be implemented by using a hardware integrated logical circuit in the processor, or by using instructions in a form of software. The steps of the network optimization method disclosed in the embodiments of this application may be directly implemented by a hardware processor, or implemented by a combination of hardware and a software module in the processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method embodiment in combination with hardware of the processor. To avoid repetition, details are not described herein again.

It should be noted that the processor 2001 in the embodiments of this application may be a central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA), or another programmable logical device, a transistor logical device, a hardware component, or a combination thereof. The processor 2001 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The memory 2002 may include a read-only memory and a random access memory, and provide an instruction and data for the processor. A part of the memory may further include a nonvolatile random access memory. For example, the memory 2002 may further store information about a device type. The memory 2002 may be integrated in the processor or disposed separately from the processor.

Based on a same concept as the foregoing method embodiment, when implementation is in a form of a chip, an embodiment of this application provides a chip. The chip may be a network optimization apparatus or a component inside the network optimization apparatus. The chip includes units or means (means) for performing steps of the network optimization method. The units or means may be implemented by hardware or by executing corresponding software by hardware. The hardware or software includes one or more modules corresponding to the foregoing function. The modules may be software and/or hardware. The chip may be connected to a memory, and is configured to read and execute a software program stored in the memory, to implement the network optimization method described above.

The memory may be a storage unit (such as a register or a cache) in the chip, or may be a storage unit located outside the chip in the terminal (such as a read-only memory (read-only memory, ROM)) or another type of static storage device (such as a random access memory (random access memory, RAM)) that can store static information and instructions.

An embodiment of this application further provides a computer readable storage medium. The computer readable storage medium stores computer instructions. When run on a computer, the instructions can implement the network optimization method described above.

An embodiment of this application further provides a computer program product. The computer program product includes a computer program, and the computer program is used to perform the network optimization method described above.

According to the network optimization method and apparatus in the embodiments of this application, the mobile base station for performing network optimization on the problematic area is determined, the scheduling task that is used to schedule the mobile base station to move to the problematic area is generated, the generated scheduling task is performed, the mobile base station for performing network optimization on the problematic area is scheduled to move to the problematic area, and network optimization is performed on the problematic area by using the mobile base station, thereby changing a network topology and providing better network signal distribution.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

**Claims**

1. A network optimization method, comprising:

   determining (S103), by a network optimization apparatus, a mobile base station for performing network optimization on a problematic area that needs network optimization, and generating(S103) a scheduling task, wherein the scheduling task is configured to schedule the mobile base station to move to the problematic area; and
   performing (S104), by the network optimization apparatus, the scheduling task to schedule the mobile base station to move to the problematic area to perform network optimization on the problematic area by using the mobile base station;
   wherein the determining (S103), by a network optimization apparatus, a mobile base station for performing network optimization on a problematic area that needs network optimization, and generating a scheduling task comprises:

      obtaining (S1031), by the network optimization apparatus, docking spot information, and determining, based on docking spot location information comprised in the docking spot information, each docking spot located within a first specified range inside the problematic area that needs network optimization and each docking spot located within a first specified range outside the problematic area that needs network optimization;
      obtaining (S1032), by the network optimization apparatus, engineering parameter data of the mobile base station, and determining, based on location information comprised in the engineering parameter data, a mobile base station located within a second specified range outside the problematic area that needs network optimization;

combining (S1033), by the network optimization apparatus, each determined mobile base station with each determined docking spot one by one, and for each combination, evaluating performance and determining a performance evaluation value;

determining (S1033), by the network optimization apparatus, a mobile base station in a combination with a largest performance evaluation value as the mobile base station for performing network optimization on the problematic area; and

generating (S1034), by the network optimization apparatus, the scheduling task, wherein the scheduling task is configured to schedule the mobile base station in the combination with the largest performance evaluation value to move to a docking spot in the problematic area that needs network optimization in the combination with the largest performance evaluation value;

wherein the performing (S104) the scheduling task to schedule the mobile base station to move to the problematic area comprises:

if the scheduled mobile base station is an active mobile base station, sending a first move instruction to the scheduled mobile base station, wherein the first move instruction is configured to instruct the mobile base station to move to the docking spot in the problematic area that needs network optimization in the combination with the largest performance evaluation value; or

if the scheduled mobile base station is a passive mobile base station, sending a second move instruction to a scheduler that drives the passive mobile base station to move, wherein the second move instruction is configured to instruct the scheduler to drive the scheduled mobile base station to move to the docking spot in the problematic area that needs network optimization in the combination with the largest performance evaluation value;

wherein the scheduler is a device.

2. The method according to claim 1, wherein the evaluating performance and determining a performance evaluation value comprises:

determining an evaluation value of a performance loss caused to an original access network by a move of the mobile base station in the combination out of the original access network;

determining an evaluation value of a performance gain generated by access of the mobile base station in the combination to a network covered by the problematic area;

determining an evaluation value of a scheduling loss required by scheduling the mobile base station in the combination to move from an original location to the docking spot in the combination; and

determining the performance evaluation value of the combination based on the evaluation value of the performance loss, the evaluation value of the performance gain, and the evaluation value of the scheduling loss.

3. The method according to claim 1, wherein the generating, by the network optimization apparatus, the scheduling task comprises:

if at least two problematic areas need network optimization, classifying, by the network optimization apparatus, problematic areas of a same priority into a group based on an urgency priority of resolving a problem; and

generating, on a per group basis and in descending order of urgency priorities of resolving problems, a scheduling task consecutively for each problematic area that needs network optimization in each group obtained through classification.

4. The method according to claim 1, wherein the scheduling, by the network optimization apparatus, the mobile base station to move to the problematic area comprises:

determining, by the network optimization apparatus, a type of the scheduled mobile base station, wherein the type of the mobile base station comprises an active mobile base station and a passive mobile base station.

5. The method according to claim 1, wherein the performing, by the network optimization apparatus, network optimization on the problematic area by using the mobile base station comprises:

determining, by the network optimization apparatus, that the scheduled mobile base station has accessed a network covered by the problematic area; and

determining, by the network optimization apparatus, an optimization configuration parameter required for performing network optimization on an original base station in the problematic area and on the scheduled mobile base station, and sending the optimization configuration parameter to the original base station in the problematic area and the scheduled mobile base station.

**6.** The method according to claim 5, wherein after the performing, by the network optimization apparatus, network optimization on the problematic area by using the mobile base station, the method further comprises:

sending, by the network optimization apparatus, an original configuration parameter to the original base station in the problematic area if determining completion of the network optimization on the problematic area, wherein the original configuration parameter is a configuration parameter that is of the original base station in the problematic area and that is recorded before network optimization is performed on the problematic area.

**7.** A network optimization apparatus, comprising:

a problematic area determining unit (201), configured to determine a problematic area that needs network optimization;

a mobile base station scheduling unit (202), configured to: determine a mobile base station for performing network optimization on the problematic area determined by the problematic area determining unit, and generate a scheduling task, wherein the scheduling task is configured to schedule the mobile base station to move to the problematic area; and

a task management unit (203), configured to: perform the scheduling task generated by the mobile base station scheduling unit, schedule the mobile base station to move to the problematic area, and perform network optimization on the problematic area by using the mobile base station;

wherein the network optimization apparatus further comprises a docking spot management unit (204) and a mobile base station management unit (205), wherein

the docking spot management unit (204) is configured to: obtain docking spot information, and determine, based on docking spot location information comprised in the docking spot information, each docking spot located within a first specified range inside the problematic area and a first specified range outside the problematic area;

the mobile base station management unit (205) is configured to: obtain engineering parameter data of the mobile base station, and determine, based on location information comprised in the engineering parameter data, mobile base station located within a second specified range outside the problematic area; and

the mobile base station scheduling unit (205) is configured to: determine the mobile base station for performing network optimization on the problematic area and generate the scheduling task in the following manner:

combining, one by one, each mobile base station determined by the mobile base station management unit with each docking spot determined by the docking spot management unit, and for each combination, evaluating performance and determining a performance evaluation value;

determining a mobile base station in a combination with a largest performance evaluation value as the mobile base station for performing network optimization on the problematic area; and

generating the scheduling task, wherein the scheduling task is configured to schedule the mobile base station in the combination with the largest performance evaluation value to move to a docking spot that needs network optimization in the combination with the largest performance evaluation value

wherein the task management unit (203) is configured to schedule, in the following manner, the mobile base station to move to the problematic area:

if the scheduled mobile base station is an active mobile base station, sending a first move instruction to the scheduled mobile base station, wherein the first move instruction is configured to instruct the mobile base station to move to the docking spot in the problematic area that needs network

optimization in the combination with the largest performance evaluation value; or

if the scheduled mobile base station is a passive mobile base station, sending a second move instruction to a scheduler that drives the passive mobile base station to move, wherein the second move instruction is configured to instruct the scheduler to drive the scheduled mobile base station to move to the docking spot in the problematic area that needs network optimization in the combination with the largest performance evaluation value;

wherein the scheduler is a device.

**8.** The apparatus according to claim 7, wherein the mobile base station scheduling unit (205) is configured to: evaluate the performance and determine the performance evaluation value in the following manner:

determining an evaluation value of a performance loss caused to an original access network by a move of the mobile base station in the combination out of the original access network; determining an evaluation value of a performance gain generated by access of the mobile base station in the combination to a network covered by the problematic area; determining an evaluation value of a scheduling loss required by scheduling the mobile base station in the combination to move from an original location to the docking spot in the combination; and determining the performance evaluation value of the combination based on the evaluation value of the performance loss, the evaluation value of the performance gain, and the evaluation value of the scheduling loss.

9. The apparatus according to any one of claims 7 to 8, wherein the mobile base station scheduling unit (205) is configured to generate the scheduling task in the following manner:

   if at least two problematic areas need network optimization, classifying problematic areas of a same priority into a group based on an urgency priority of resolving a problem; and generating, on a per group basis and in descending order of urgency priorities of resolving problems, a scheduling task consecutively for each problematic area that needs network optimization in each group obtained through classification.

10. The apparatus according to claim 7, wherein the apparatus further comprises a scheduler management unit (206), wherein the scheduler management unit (206) is configured to obtain scheduler configuration data; and the task management unit is configured to schedule, in the following manner, the mobile base station to move to the problematic area:

    determining a type of the scheduled mobile base station, wherein the type of the mobile base station comprises an active mobile base station and a passive mobile base station; and if the scheduled mobile base station is a passive mobile base station, obtaining the scheduler configuration data that is obtained by the scheduler management unit; determining, based on the scheduler configuration data, the scheduler for driving the passive mobile base station to move.

11. The apparatus according to claim 7, wherein the task management unit (203) is configured to perform, in the following manner, network optimization on the problematic area by using the mobile base station:

determining that the scheduled mobile base station has accessed a network covered by the problematic area; and determining an optimization configuration parameter required for performing network optimization on an original base station in the problematic area and on the scheduled mobile base station, and sending the optimization configuration parameter to the original base station in the problematic area and the scheduled mobile base station.

12. A memory storing a software which, when executed by a network optimization apparatus, causes the network optimization apparatus to implement the method according to any one of claims 1 to 6.


**Patentansprüche**

1. Netzwerkoptimierungsverfahren, umfassend:

   Bestimmen (S103) einer mobilen Basisstation durch eine Netzwerkoptimierungseinrichtung zum Durchführen einer Netzwerkoptimierung in einem Problembereich, der einer Netzwerkoptimierung bedarf, und Erzeugen (S103) einer Planungsaufgabe, wobei die Planungsaufgabe dazu konfiguriert ist, zu planen, dass sich die mobile Basisstation in den Problembereich bewegt; und Durchführen (S104) der Planungsaufgabe durch die Netzwerkoptimierungseinrichtung, um zu planen, dass sich die mobile Basisstation in den Problembereich bewegt, um unter Verwendung der mobilen Basisstation eine Netzwerkoptimierung in dem Problembereich durchzuführen; wobei das Bestimmen (S103) einer mobilen Basisstation zum Durchführen einer Netzwerkoptimierung in einem Problembereich, der einer Netzwerkoptimierung bedarf, durch eine Netzwerkoptimierungseinrichtung und Erzeugen einer Planungsaufgabe Folgendes umfasst:

      Erlangen (S1031) von Andockstelleninformationen durch die Netzwerkoptimierungseinrichtung und Bestimmen, basierend auf den in den Andockstelleninformationen umfassten Andockstellenstandortinformationen, jeder Andockstelle, die sich innerhalb einer ersten spezifizierten Entfernung innerhalb des Problembereichs befindet, der einer Netzwerkoptimierung bedarf, und jeder Andockstelle, die sich innerhalb einer ersten spezifizierten Entfernung außerhalb des Problembereichs befindet, der einer Netzwerkoptimierung bedarf;

Erlangen (S1032) von technischen Parameterdaten der mobilen Basisstation durch die Netzwerkoptimierungseinrichtung und Bestimmen einer mobilen Basisstation, die sich innerhalb einer zweiten spezifizierten Entfernung außerhalb des Problembereichs befindet, der einer Netzwerkoptimierung bedarf, auf der Grundlage von in den technischen Parameterdaten umfassten Standortinformationen;

Kombinieren (S1033) jeder bestimmten mobilen Basisstation mit jeder bestimmten Andockstelle nacheinander durch die Netzwerkoptimierungseinrichtung und Bewerten der Leistung für jede Kombination und Bestimmen eines Leistungsbewertungswerts;

Bestimmen (S1033) einer mobilen Basisstation in einer Kombination mit einem größten Leistungsbewertungswert als die mobile Basisstation zum Durchführen einer Netzwerkoptimierung in dem Problembereich durch die Netzwerkoptimierungseinrichtung; und

Erzeugen (S1034) der Planungsaufgabe durch die Netzwerkoptimierungseinrichtung, wobei die Planungsaufgabe dazu konfiguriert ist, zu planen, dass sich die mobile Basisstation in der Kombination mit dem größten Leistungsbewertungswert zu einer Andockstelle in der Kombination mit dem höchsten Leistungsbewertungswert in dem Problembereich bewegt, der einer Netzwerkoptimierung bedarf;

wobei das Durchführen (S104) der Planungsaufgabe, um zu planen, dass sich die mobile Basisstation in den Problembereich bewegt, Folgendes umfasst:

falls die geplante mobile Basisstation eine aktive mobile Basisstation ist, Senden einer ersten Bewegungsanweisung an die geplante mobile Basisstation, wobei die erste Bewegungsanweisung dazu konfiguriert ist, die mobile Basisstation anzuweisen, sich zu der Andockstelle in der Kombination mit dem größten Leistungsbewertungswert in dem Problembereich zu bewegen, der einer Netzwerkoptimierung bedarf; oder

falls die geplante mobile Basisstation eine passive mobile Basisstation ist, Senden einer zweiten Bewegungsanweisung an einen Scheduler, der die passive mobile Basisstation zum Bewegen antreibt, wobei die zweite Bewegungsanweisung dazu konfiguriert ist, den Scheduler anzuweisen, die geplante mobile Basisstation anzutreiben, sich zu der Andockstelle in der Kombination mit dem größten Leistungsbewertungswert in dem Problembereich zu bewegen, der einer Netzwerkoptimierung bedarf;

wobei der Scheduler eine Vorrichtung ist.

2.  Verfahren nach Anspruch 1, wobei das Bewerten der Leistung und das Bestimmen eines Leistungsbewertungswerts Folgendes umfasst:

Bestimmen eines Bewertungswerts eines Leistungsverlusts, der einem ursprünglichen Zugangsnetzwerk durch eine Bewegung der mobilen Basisstation in der Kombination aus dem ursprünglichen Zugangsnetzwerk heraus verursacht wird;

Bestimmen eines Bewertungswerts eines Leistungsgewinns, der durch den Zugang der mobilen Basisstation in der Kombination zu einem durch den Problembereich abgedeckten Netzwerk erzeugt wird;

Bestimmen eines Bewertungswerts eines Planungsverlusts, der durch das Planen der Bewegung der mobilen Basisstation in der Kombination von einem ursprünglichen Standort zu der Andockstelle in der Kombination erforderlich ist; und

Bestimmen des Leistungsbewertungswerts der Kombination basierend auf dem Bewertungswert des Leistungsverlusts, dem Bewertungswert des Leistungsgewinns und dem Bewertungswert des Planungsverlusts.

3.  Verfahren nach Anspruch 1, wobei das Erzeugen der Planungsaufgabe durch die Netzwerkoptimierungseinrichtung Folgendes umfasst:

falls mindestens zwei Problembereiche einer Netzwerkoptimierung bedürfen, Klassifizieren von Problembereichen mit einer gleichen Priorität in eine Gruppe auf der Grundlage einer Dringlichkeitspriorität einer Problemlösung durch die Netzwerkoptimierungseinrichtung; und

Erzeugen einer Planungsaufgabe auf Gruppenbasis und in absteigender Reihenfolge der Dringlichkeitsprioritäten einer Problemlösung nacheinander für jeden Problembereich, der einer Netzwerkoptimierung bedarf, in jeder durch Klassifizierung erlangten Gruppe.

4.  Verfahren nach Anspruch 1, wobei das Planen des Bewegens der mobilen Basisstation in den Problembereich durch die Netzwerkoptimierungseinrichtung Folgendes umfasst:

Bestimmen eines Typs der geplanten mobilen Basisstation durch die Netzwerkoptimierungseinrichtung, wobei der Typ der mobilen Basisstation eine aktive mobile Basisstation und eine passive mobile Basisstation umfasst.

5. Verfahren nach Anspruch 1, wobei das Durchführen einer Netzwerkoptimierung in dem Problembereich durch die Netzwerkoptimierungseinrichtung unter Verwendung der mobilen Basisstation Folgendes umfasst:

Bestimmen durch die Netzwerkoptimierungseinrichtung, dass die geplante mobile Basisstation auf ein Netzwerk zugegriffen hat, das durch den Problembereich abgedeckt wird; und Bestimmen eines Optimierungskonfigurationsparameters durch die Netzwerkoptimierungseinrichtung, der zum Durchführen einer Netzwerkoptimierung an einer ursprünglichen Basisstation in dem Problembereich und an der geplanten mobilen Basisstation erforderlich ist, und Senden des Optimierungskonfigurationsparameters an die ursprüngliche Basisstation in dem Problembereich und an die geplante mobile Basisstation.

6. Verfahren nach Anspruch 5, wobei nach dem Durchführen einer Netzwerkoptimierung in dem Problembereich durch die Netzwerkoptimierungseinrichtung unter Verwendung der mobilen Basisstation das Verfahren ferner Folgendes umfasst:
Senden eines ursprünglichen Konfigurationsparameters durch die Netzwerkoptimierungseinrichtung an die ursprüngliche Basisstation in dem Problembereich, falls ein Abschluss der Netzwerkoptimierung in dem Problembereich bestimmt ist, wobei der ursprüngliche Konfigurationsparameter ein Konfigurationsparameter ist, der zu der ursprünglichen Basisstation in dem Problembereich gehört und der aufgezeichnet wird, bevor die Netzwerkoptimierung in de Problembereich durchgeführt wird.

7. Netzwerkoptimierungseinrichtung, umfassend:

eine Problembereichsbestimmungseinheit (201), die dazu konfiguriert ist, einen Problembereich zu bestimmen, der einer Netzwerkoptimierung bedarf;
eine Planungseinheit (202) für mobile Basisstationen, die zu Folgendem konfiguriert ist: Bestimmen einer mobilen Basisstation zum Durchführen einer Netzwerkoptimierung in dem durch die Problembereichsbestimmungseinheit bestimmten Problembereich und Erzeugen einer Planungsaufgabe, wobei die Planungsaufgabe dazu konfiguriert ist, zu planen, dass sich die mobile Basisstation in den Problembereich bewegt; und
eine Aufgabenverwaltungseinheit (203), die zu Folgendem konfiguriert ist: Durchführen der durch die Planungseinheit für mobile Basisstationen erzeugten Planungsaufgabe, Planen, dass sich die mobile Basisstation in den Problembereich bewegt, und Durchführen einer Netzwerkoptimierung in dem Problembereich unter Verwendung der mobilen Basisstation;
wobei die Netzwerkoptimierungseinrichtung ferner eine Andockstellenverwaltungseinheit (204) und eine Verwaltungseinheit (205) für mobile Basisstationen umfasst, wobei
die Andockstellenverwaltungseinheit (204) zu Folgendem konfiguriert ist: Erlangen von Andockstelleninformationen und Bestimmen, auf der Grundlage von in den Andockstelleninformationen umfassten Andockstellenstandortinformationen, jeder Andockstelle, die sich innerhalb einer ersten spezifizierten Entfernung innerhalb des Problembereichs und einer ersten spezifizierten Entfernung außerhalb des Problembereichs befindet;
die Verwaltungseinheit (205) für mobile Basisstationen zu Folgendem konfiguriert ist: Erlangen von technischen Parameterdaten der mobilen Basisstation und Bestimmen, auf der Grundlage von in den technischen Parameterdaten umfassten Standortinformationen, einer mobilen Basisstation, die sich innerhalb einer zweiten spezifizierten Entfernung außerhalb des Problembereichs befindet; und
die Planungseinheit (205) für mobile Basisstationen zu Folgendem konfiguriert ist: Bestimmen der mobilen Basisstation zum Durchführen einer Netzwerkoptimierung in dem Problembereich und Erzeugen der Planungsaufgabe auf die folgende Weise:

Kombinieren, einer nach der anderen, jeder durch die Verwaltungseinheit für mobile Basisstationen bestimmten mobilen Basisstation mit jeder durch die Andockstellenverwaltungseinheit bestimmten Andockstelle und Bewerten der Leistung und Bestimmen eines Leistungsbewertungswerts für jede Kombination;
Bestimmen einer mobilen Basisstation in einer Kombination mit einem größten Leistungsbewertungswert als die mobile Basisstation zum Durchführen einer Netzwerkoptimierung in dem Problembereich; und
Erzeugen der Planungsaufgabe, wobei die Planungsaufgabe dazu konfiguriert ist, zu planen, dass sich die mobile Basisstation in der Kombination mit dem größten Leistungsbewertungswert zu einer Andockstelle in der Kombination mit dem höchsten Leistungsbewertungswert bewegt, die einer Netzwerkoptimierung bedarf

wobei die Aufgabenverwaltungseinheit (203) dazu konfiguriert ist, auf folgende Weise zu planen, dass sich die mobile Basisstation in den Problembereich bewegt:

> falls die geplante mobile Basisstation eine aktive mobile Basisstation ist, Senden einer ersten Bewegungsanweisung an die geplante mobile Basisstation, wobei die erste Bewegungsanweisung dazu konfiguriert ist, die mobile Basisstation anzuweisen, sich zu der Andockstelle in der Kombination mit dem größten Leistungsbewertungswert in dem Problembereich zu bewegen, der einer Netzwerkoptimierung bedarf; oder
> falls die geplante mobile Basisstation eine passive mobile Basisstation ist, Senden einer zweiten Bewegungsanweisung an einen Scheduler, der die passive mobile Basisstation zum Bewegen antreibt, wobei die zweite Bewegungsanweisung dazu konfiguriert ist, den Scheduler anzuweisen, die geplante mobile Basisstation anzutreiben, sich zu der Andockstelle in der Kombination mit dem größten Leistungsbewertungswert in dem Problembereich zu bewegen, der einer Netzwerkoptimierung bedarf;
> wobei der Scheduler eine Vorrichtung ist.

8. Einrichtung nach Anspruch 7, wobei die Planungseinheit (205) für mobile Basisstationen zu Folgendem konfiguriert ist:
Bewerten der Leistung und Bestimmen des Leistungsbewertungswerts auf die folgende Weise:

> Bestimmen eines Bewertungswerts eines Leistungsverlusts, der einem ursprünglichen Zugangsnetzwerk durch eine Bewegung der mobilen Basisstation in der Kombination aus dem ursprünglichen Zugangsnetzwerk heraus verursacht wird;
> Bestimmen eines Bewertungswerts eines Leistungsgewinns, der durch den Zugang der mobilen Basisstation in der Kombination zu einem durch den Problembereich abgedeckten Netzwerk erzeugt wird;
> Bestimmen eines Bewertungswerts eines Planungsverlusts, der durch das Planen der Bewegung der mobilen Basisstation in der Kombination von einem ursprünglichen Standort zu der Andockstelle in der Kombination erforderlich ist; und
Bestimmen des Leistungsbewertungswerts der Kombination basierend auf dem Bewertungswert des Leistungsverlusts, dem Bewertungswert des Leistungsgewinns und dem Bewertungswert des Planungsverlusts.

9. Einrichtung nach einem der Ansprüche 7 bis 8, wobei die Planungseinheit (205) für mobile Basisstationen zum Erzeugen der Planungsaufgabe auf die folgende Weise konfiguriert ist:

> falls mindestens zwei Problembereiche einer Netzwerkoptimierung bedürfen, Klassifizieren von Problembereichen mit einer gleichen Priorität in eine Gruppe auf der Grundlage einer Dringlichkeitspriorität einer Problemlösung; und Erzeugen einer Planungsaufgabe auf Gruppenbasis und in absteigender Reihenfolge der Dringlichkeitsprioritäten einer Problemlösung nacheinander für jeden Problembereich, der einer Netzwerkoptimierung bedarf, in jeder durch Klassifizierung erlangten Gruppe.

10. Einrichtung nach Anspruch 7, wobei die Einrichtung ferner eine Scheduler-Verwaltungseinheit (206) umfasst, wobei die Scheduler-Verwaltungseinheit (206) dazu konfiguriert ist, Scheduler-Konfigurationsdaten zu erlangen; und
die Aufgabenverwaltungseinheit dazu konfiguriert ist, auf folgende Weise zu planen, dass sich die mobile Basisstation in den Problembereich bewegt:

> Bestimmen eines Typs der geplanten mobilen Basisstation, wobei der Typ der mobilen Basisstation eine aktive mobile Basisstation und eine passive mobile Basisstation umfasst; und
> falls die geplante mobile Basisstation eine passive mobile Basisstation ist, Erlangen der durch die Scheduler-Verwaltungseinheit erlangten Scheduler-Konfigurationsdaten;
> Bestimmen des Schedulers zum Antreiben der passiven mobilen Basisstation zum Bewegen auf der Grundlage der Scheduler-Konfigurationsdaten.

11. Einrichtung nach Anspruch 7, wobei die Aufgabenverwaltungseinheit (203) dazu konfiguriert ist, unter Verwendung der mobilen Basisstation eine Netzwerkoptimierung in dem Problembereich in der folgenden Weise durchzuführen:

> Bestimmen, dass die geplante mobile Basisstation auf ein Netzwerk zugegriffen hat, das durch den Problembereich abgedeckt wird; und
> Bestimmen eines Optimierungskonfigurationsparameters, der zum Durchführen einer Netzwerkoptimierung an einer ursprünglichen Basisstation in dem Problembereich und an der geplanten mobilen Basisstation erforderlich ist, und Senden des Optimierungskonfigurationsparameters an die ursprüngliche Basisstation in dem Problembereich und an die geplante mobile Basisstation.

12. Speicher, in dem eine Software gespeichert ist, die, wenn sie durch eine Netzwerkoptimierungseinrichtung ausgeführt wird, bewirkt, dass die Netzwerkoptimierungseinrichtung das Verfahren nach einem der Ansprüche 1 bis 6 implementiert.

## Revendications

1.  Procédé d'optimisation de réseau, comprenant :

    la détermination (S103), par un appareil d'optimisation de réseau, d'une station de base mobile pour exécuter une optimisation de réseau sur une zone problématique qui nécessite une optimisation de réseau, et la génération (S103) d'une tâche de planification, dans lequel la tâche de planification est configurée pour planifier le déplacement de la station de base mobile vers la zone problématique ; et
    l'exécution (S104), par l'appareil d'optimisation de réseau, de la tâche de planification pour planifier le déplacement de la station de base mobile vers la zone problématique pour exécuter une optimisation de réseau sur la zone problématique à l'aide de la station de base mobile ;
    dans lequel la détermination (S103), par un appareil d'optimisation de réseau, d'une station de base mobile pour exécuter une optimisation de réseau sur une zone problématique qui nécessite une optimisation de réseau, et la génération d'une tâche de planification comprennent :

    l'obtention (S1031), par l'appareil d'optimisation de réseau, d'informations de point d'amarrage, et la détermination, sur la base d'informations d'emplacement de point d'amarrage comprises dans les informations de point d'amarrage, de chaque point d'amarrage situé dans une première plage spécifiée à l'intérieur de la zone problématique qui nécessite une optimisation de réseau et chaque point d'amarrage situé dans une première plage spécifiée à l'extérieur de la zone problématique qui nécessite une optimisation de réseau ;
    l'obtention (S1032), par l'appareil d'optimisation de réseau, de données de paramètres d'ingénierie de la station de base mobile, et la détermination, sur la base d'informations d'emplacement comprises dans les données de paramètres d'ingénierie, d'une station de base mobile située dans une seconde plage spécifiée à l'extérieur de la zone problématique qui nécessite une optimisation de réseau ;
la combinaison (S1033), par l'appareil d'optimisation de réseau, de chaque station de base mobile déterminée avec chaque point d'amarrage déterminé un par un, et pour chaque combinaison, l'évaluation des performances et la détermination d'une valeur d'évaluation de performances ;
la détermination (S1033), par l'appareil d'optimisation de réseau, d'une station de base mobile dans une combinaison avec une valeur d'évaluation de performance la plus élevée en tant que station de base mobile pour exécuter une optimisation de réseau sur la zone problématique ; et
la génération (S1034), par l'appareil d'optimisation de réseau, de la tâche de planification, dans lequel la tâche de planification est configurée pour planifier le déplacement de la station de base mobile dans la combinaison avec la valeur d'évaluation de performances la plus élevée vers un point d'amarrage dans la zone problématique qui nécessite une optimisation de réseau dans la combinaison avec la valeur d'évaluation de performances la plus élevée ;
dans lequel l'exécution (S104) de la tâche de planification pour planifier le déplacement de la station de base mobile vers la zone problématique comprend :

si la station de base mobile planifiée est une station de base mobile active, l'envoi d'une première instruction de déplacement à la station de base mobile planifiée, dans lequel la première instruction de déplacement est configurée pour ordonner à la station de base mobile de se déplacer vers le point d'amarrage dans la zone problématique qui nécessite une optimisation de réseau dans la combinaison avec la valeur d'évaluation de performances la plus élevée ; ou
si la station de base mobile planifiée est une station de base mobile passive, l'envoi d'une seconde instruction de déplacement à un planificateur qui entraîne le déplacement de la station de base mobile passive, dans lequel la seconde instruction de déplacement est configurée pour ordonner au planificateur d'entraîner le déplacement de la station de base mobile planifiée vers le point d'amarrage dans la zone problématique qui nécessite une optimisation de réseau dans la combinaison avec la valeur d'évaluation de performances la plus élevée ;

dans lequel le planificateur est un dispositif.

2. Procédé selon la revendication 1, dans lequel l'évaluation des performances et la détermination d'une valeur d'évaluation de performances comprennent :

la détermination d'une valeur d'évaluation d'une perte de performances causée à un réseau d'accès d'origine par un déplacement de la station de base mobile dans la combinaison hors du réseau d'accès d'origine ;

la détermination d'une valeur d'évaluation d'un gain de performances généré par l'accès de la station de base mobile dans la combinaison à un réseau couvert par la zone problématique ;

la détermination d'une valeur d'évaluation d'une perte de planification requise par la planification du déplacement de la station de base mobile dans la combinaison à partir d'un emplacement d'origine vers le point d'amarrage dans la combinaison ; et

la détermination de la valeur d'évaluation de performances de la combinaison sur la base de la valeur d'évaluation de la perte de performances, de la valeur d'évaluation du gain de performances et de la valeur d'évaluation de la perte de planification.

3. Procédé selon la revendication 1, dans lequel la génération, par l'appareil d'optimisation de réseau, de la tâche de planification comprend :

si au moins deux zones problématiques nécessitent une optimisation de réseau, la classification, par l'appareil d'optimisation de réseau, de zones problématiques d'une même priorité dans un groupe sur la base d'une priorité d'urgence de résolution d'un problème ; et

la génération, sur une base par groupe et par ordre décroissant de priorités d'urgence de résolution des problèmes, d'une tâche de planification consécutive pour chaque zone problématique qui nécessite une optimisation de réseau dans chaque groupe obtenu à travers la classification.

4. Procédé selon la revendication 1, dans lequel la planification, par l'appareil d'optimisation de réseau, du déplacement de la station de base mobile vers la zone problématique comprend :

la détermination, par l'appareil d'optimisation de réseau, d'un type de la station de base mobile planifiée, dans lequel le type de la station de base mobile comprend une station de base mobile active et une station de base mobile passive.

5. Procédé selon la revendication 1, dans lequel l'exécution, par l'appareil d'optimisation de réseau, d'une optimisation de réseau sur la zone problématique à l'aide de la station de base mobile comprend :

la détermination, par l'appareil d'optimisation de réseau, que la station de base mobile planifiée a accédé à un réseau couvert par la zone problématique ; et

la détermination, par l'appareil d'optimisation de réseau, d'un paramètre de configuration d'optimisation requis pour exécuter une optimisation de réseau sur une station de base d'origine dans la zone problématique et sur la station de base mobile planifiée, et l'envoi du paramètre de configuration d'optimisation à la station de base d'origine dans la zone problématique et à la station de base mobile planifiée.

6. Procédé selon la revendication 5, dans lequel après l'exécution, par l'appareil d'optimisation de réseau, d'une optimisation de réseau sur la zone problématique à l'aide de la station de base mobile, le procédé comprend également :

l'envoi, par l'appareil d'optimisation de réseau, d'un paramètre de configuration d'origine à la station de base d'origine dans la zone problématique s'il est déterminé que l'optimisation de réseau sur la zone problématique est terminée, dans lequel le paramètre de configuration d'origine est un paramètre de configuration qui est de la station de base d'origine dans la zone problématique et qui est enregistré avant que l'optimisation de réseau ne soit exécutée sur la zone problématique.

7. Appareil d'optimisation de réseau, comprenant :

une unité de détermination de zone problématique (201), configurée pour déterminer une zone problématique qui nécessite une optimisation de réseau ;

une unité de planification de station de base mobile (202), configurée pour : déterminer une station de base mobile pour exécuter une optimisation de réseau sur la zone problématique déterminée par l'unité de détermination de zone problématique, et générer une tâche de planification, dans lequel la tâche de planification est configurée pour planifier le déplacement de la station de base mobile vers la zone problématique ; et

une unité de gestion de tâches (203), configurée pour : exécuter la tâche de planification générée par l'unité de planification de station de base mobile, planifier le déplacement de la station de base mobile vers la zone problématique et exécuter une optimisation de réseau sur la zone problématique à l'aide de la station de base mobile ;

dans lequel l'appareil d'optimisation de réseau comprend également une unité de gestion de point d'amarrage (204) et une unité de gestion de station de base mobile (205), dans lequel l'unité de gestion de point d'amarrage (204) est configurée pour : obtenir des informations de point d'amarrage, et déterminer, sur la base d'informations d'emplacement de point d'amarrage comprises dans les informations de point d'amarrage, chaque point d'amarrage situé dans une première plage spécifiée à l'intérieur de la zone problématique et une première plage spécifiée à l'extérieur de la zone problématique ;

l'unité de gestion de station de base mobile (205) est configurée pour : obtenir des données de paramètres d'ingénierie de la station de base mobile, et déterminer, sur la base d'informations d'emplacement comprises dans les données de paramètres d'ingénierie, une station de base mobile située dans une seconde plage spécifiée à l'extérieur de la zone problématique ; et

l'unité de planification de station de base mobile (205) est configurée pour : déterminer la station de base mobile pour exécuter une optimisation de réseau sur la zone problématique et générer la tâche de planification de la manière suivante :

la combinaison, un par un, de chaque station de base mobile déterminée par l'unité de gestion de station de base mobile avec chaque point d'amarrage déterminé par l'unité de gestion de point d'amarrage, et pour chaque combinaison, l'évaluation des performances et la détermination d'une valeur d'évaluation de performances ;

la détermination d'une station de base mobile dans une combinaison avec une valeur d'évaluation de performances la plus élevée en tant que station de base mobile pour exécuter une optimisation de réseau sur la zone problématique ; et

la génération de la tâche de planification, dans lequel la tâche de planification est configurée pour planifier le déplacement de la station de base mobile dans la combinaison avec la valeur d'évaluation de performances la plus élevée vers un point d'amarrage qui nécessite une optimisation de réseau dans la combinaison avec la valeur d'évaluation de performances la plus élevée

dans lequel l'unité de gestion de tâches (203) est configurée pour planifier, de la manière suivante, le déplacement de la station de base mobile vers la zone problématique :

si la station de base mobile planifiée est une station de base mobile active, l'envoi d'une première instruction de déplacement à la station de base mobile planifiée, dans lequel la première instruction de déplacement est configurée pour ordonner à la station de base mobile de se déplacer vers le point d'amarrage dans la zone problématique qui nécessite une optimisation de réseau dans la combinaison avec la valeur d'évaluation de performances la plus élevée ; ou

si la station de base mobile planifiée est une station de base mobile passive, l'envoi d'une seconde instruction de déplacement à un planificateur qui entraîne le déplacement de la station de base mobile passive, dans lequel la seconde instruction de déplacement est configurée pour ordonner au planificateur d'entraîner le déplacement de la station de base mobile planifiée vers le point d'amarrage dans la zone problématique qui nécessite une optimisation de réseau dans la combinaison avec la valeur d'évaluation de performances la plus élevée ;

dans lequel le planificateur est un dispositif.

8. Appareil selon la revendication 7, dans lequel l'unité de planification de station de base mobile (205) est configurée pour : évaluer les performances et déterminer la valeur d'évaluation de performances de la manière suivante :

la détermination d'une valeur d'évaluation d'une perte de performances causée à un réseau d'accès d'origine par un déplacement de la station de base mobile dans la combinaison hors du réseau d'accès d'origine ;

la détermination d'une valeur d'évaluation d'un gain de performances généré par l'accès de la station de base mobile dans la combinaison à un réseau couvert par la zone problématique ;

la détermination d'une valeur d'évaluation d'une perte de planification requise par la planification du déplacement de la station de base mobile dans la combinaison à partir d'un emplacement d'origine vers le point d'amarrage dans la combinaison ; et

la détermination de la valeur d'évaluation de performances de la combinaison sur la base de la valeur d'évaluation de la perte de performances, de la valeur d'évaluation du gain de performances et de la valeur d'évaluation de la perte de planification.

9. Appareil selon l'une quelconque des revendications 7 à 8, dans lequel l'unité de planification de station de base mobile (205) est configurée pour générer la tâche de planification de la manière suivante :

si au moins deux zones problématiques nécessitent une optimisation de réseau, la classification de zones problématiques d'une même priorité dans un groupe sur la base d'une priorité d'urgence de résolution d'un problème ; et la génération, sur une base par groupe et par ordre décroissant de priorités d'urgence de résolution des problèmes, d'une tâche de planification consécutive pour chaque zone problématique qui nécessite une optimisation de réseau dans chaque groupe obtenu à travers la classification.

10. Appareil selon la revendication 7, dans lequel l'appareil comprend également une unité de gestion de planificateur (206), dans lequel l'unité de gestion de planificateur (206) est configurée pour obtenir des données de configuration de planificateur ; et l'unité de gestion de tâches est configurée pour planifier, de la manière suivante, le déplacement de la station de base mobile vers la zone problématique :

la détermination d'un type de la station de base mobile planifiée, dans lequel le type de la station de base mobile comprend une station de base mobile active et une station de base mobile passive ; et si la station de base mobile planifiée est une station de base mobile passive, l'obtention des données de configuration de planificateur qui sont obtenues par l'unité de gestion de planificateur ; la détermination, sur la base des données de configuration de planificateur, du planificateur pour entraîner le déplacement de la station de base mobile passive.

11. Appareil selon la revendication 7, dans lequel l'unité de gestion de tâches (203) est configurée pour exécuter, de la manière suivante, une optimisation de réseau sur la zone problématique à l'aide de la station de base mobile :

la détermination que la station de base mobile planifiée a accédé à un réseau couvert par la zone problématique ; et

la détermination d'un paramètre de configuration d'optimisation requis pour exécuter une optimisation de réseau sur une station de base d'origine dans la zone problématique et sur la station de base mobile planifiée, et l'envoi du paramètre de configuration d'optimisation à la station de base d'origine dans la zone problématique et à la station de base mobile planifiée.

12. Mémoire stockant un logiciel qui, lorsqu'il est exécuté par un appareil d'optimisation de réseau, amène l'appareil d'optimisation de réseau à mettre en œuvre le procédé selon l'une quelconque des revendications 1 à 6.

FIG. 1

FIG. 2

FIG. 3

Mobile base station management module

Mobile base station operation management submodule

Mobile base station management interface

Mobile base station operation interface

Mobile base station interface adaptation submodule

Measurement control interface adaptation

Scheduling control interface adaptation

Interface adaptation of model version 1

Interface adaptation of model version 2

...

Interface adaptation of model version k

Mobile base station data management submodule

FIG. 4

Scheduler management module

Scheduler management interface

Scheduler operation interface

Scheduler operation management submodule

Scheduler interface adaptation submodule

Measurement control interface adaptation

Scheduling control interface adaptation

Interface adaptation of model version 1

Interface adaptation of model version 2

...

Interface adaptation of model version k

Scheduler data management submodule

FIG. 5

Mobile base station scheduling module

| Mobile base station scheduling submodule | Problematic area management submodule | Task management submodule |

FIG. 6

S101

Determine a problematic area that needs network optimization

S102

Select a problematic area on which network optimization cannot be performed by using a fixed base station

S103

Determine a mobile base station for performing network optimization on the problematic area and generate a scheduling task

S104

Perform the scheduling task, schedule the mobile base station for performing network optimization on the problematic area to move to the problematic area, and perform network optimization on the problematic area by using the mobile base station

FIG. 7

Obtain docking spot information, and determine, based on docking spot location information included in the docking spot information, each docking spot located within a first specified range inside a problematic area and a first specified range outside the problematic area

S1031

Obtain engineering parameter data of a mobile base station, and determine, based on location information included in the engineering parameter data, each mobile base station located within a second specified range outside the problematic area

S1032

Combine each determined mobile base station with each determined docking spot one by one, and for each combination, evaluate performance and determine a performance evaluation value; and determine a combination with a largest performance evaluation value, and use a mobile station in the combination with the largest performance evaluation value as the mobile base station for performing network optimization on the problematic area

S1033

Generate a scheduling task, where the scheduling task is used to schedule the mobile base station in the combination with the largest performance evaluation value to move to a docking spot in the combination with the largest performance evaluation value

S1034

FIG. 8

200

Network optimization apparatus

Mobile base
station
management unit    205

201

Problematic area
determining unit

202

Mobile base
station scheduling
unit

203

Task management
unit

204

Docking spot
management unit

206

Scheduler
management unit

FIG. 9

2000

Network optimization device

2001

Processor

2002

Memory

2003

Input/Output
interface

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017013476 A1
- US 2017257779 A1
- US 201602847 A1